(19) Europäisches Patentamt
European Patent Office
Office européen des brevets

(11) **EP 4 372 055 A1**

(12) **EUROPEAN PATENT APPLICATION**
published in accordance with Art. 153(4) EPC

(43) Date of publication:
**22.05.2024 Bulletin 2024/21**

(21) Application number: **22878975.6**

(22) Date of filing: **07.10.2022**

(51) International Patent Classification (IPC):
***C08L 91/06*** *(2006.01)* ***C08L 101/00*** *(2006.01)*
***C08K 3/013*** *(2018.01)*

(52) Cooperative Patent Classification (CPC):
**C08K 3/013; C08L 91/06; C08L 101/00;**
Y02E 60/10

(86) International application number:
**PCT/KR2022/015196**

(87) International publication number:
**WO 2023/059154 (13.04.2023 Gazette 2023/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.10.2021 KR 20210134137**
**06.10.2022 KR 20220128214**

(71) Applicant: **LG Chem, Ltd.**
**Yeongdeungpo-gu**
**Seoul 07336 (KR)**

(72) Inventors:
- **LEE, Hong Chan**
**Daejeon 34122 (KR)**
- **LEE, Seung Min**
**Daejeon 34122 (KR)**
- **JUNG, Jin Mi**
**Daejeon 34122 (KR)**

(74) Representative: **Hoffmann Eitle**
**Patent- und Rechtsanwälte PartmbB**
**Arabellastraße 30**
**81925 München (DE)**

# (54) CURABLE COMPOSITION

(57) The present application relates to a curable composition and a use thereof. As the curable composition of the present application is applied to a product that generates heat during the driving or maintenance process, it is possible to provide a curable composition that can be used as a material capable of treating the heat. The curable composition of the present application is applied to a product in which a plurality of elements generating heat are integrated, whereby it can efficiently treat the heat generated by the element while maintaining a uniform temperature of the product. In addition, even when the abnormal heat, explosion or ignition occurs in any one of the plurality of elements, the curable composition of the present application is applied to such a product, so that the effect of such heat, explosion or ignition to other adjacent elements can be prevented or minimized. The curable composition of the present application can also stably perform such a function over a long period of time.

[Figure 3]

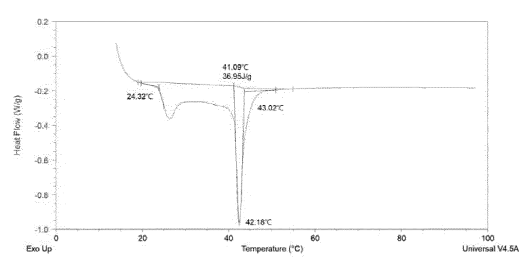


EP 4 372 055 A1

## Description

[Technical Field]

Cross-reference to related applications

This application claims the benefit of priority based on Korean Patent Application No. 10-2021-0134137, filed on October 8, 2021 and Korean Patent Application No. 10-2022-0128214, filed on October 6, 2022, and the entire contents of the Korean patent application are incorporated herein by reference.

Technical Field

The present application relates to a curable composition and a use thereof.

[Background Art]

The importance of technology to treat the heat generated by products increases more and more. One of the representative methods for treating heat is a method of discharging the heat generated from the product to the outside using a material with an excellent thermal conductivity, or dissipating the generated heat using a cooling medium or the like.

It is a difficult problem to treat heat in a product composed of elements that generate heat (heating elements).

For example, a battery module or battery pack comprises a plurality of battery cells or a plurality of battery modules, which are positioned relatively adjacent to each other. Therefore, the heat generated in any one battery cell or battery module may affect other adjacent elements, and in some cases may cause problems such as a chain ignition or a chain explosion.

Therefore, in such a product, it is necessary to prevent the heat, explosion or fire, and the like generated in any one element from affecting other adjacent elements.

In addition, depending on the product, it is necessary to maintain a uniform temperature throughout the driving or maintenance process. Therefore, in a product composed of a plurality of heating elements together as above, there is a need for a technology that the entire temperature of the product can be uniformly maintained during the driving or maintenance process, and the abnormal heating, or the explosion or fire occurring in any one heating element can be treated without being propagated to other elements if possible.

[Disclosure]

[Technical Problem]

The present application relates to a curable composition and a use thereof. As the curable composition of the present application is applied to a product that generates heat during the driving or maintenance process, it is possible to provide a curable composition that can be used as a material capable of treating the heat. The curable composition of the present application is applied to a product in which a plurality of elements generating heat are integrated, whereby it can efficiently treat the heat generated by the element while maintaining a uniform temperature of the product. In addition, even when the abnormal heat, explosion or ignition occurs in any one of the plurality of elements, the curable composition of the present application is applied to such a product, so that the effect of such heat, explosion or ignition to other adjacent elements can be prevented or minimized. The curable composition of the present application can also stably perform such a function over a long period of time. The present application can also provide a cured body formed by such a curable composition, or a use of the curable composition or the cured body.

[Technical Solution]

Among the physical properties mentioned in this specification, the physical property in which a temperature affects the physical property is a physical property measured at room temperature, unless otherwise specified.

In this specification, the term room temperature is a natural temperature without warming or cooling, which means, for example, any one temperature within the range of about 10°C to 30°C, for example, a temperature of about 15°C, about 18°C, about 20°C, about 23°C or about 25°C or so. In addition, unless otherwise specified in this specification, the unit of temperature is °C.

Among the physical properties mentioned in this specification, when a pressure affects the result, the relevant physical property is a physical property measured at normal pressure, unless otherwise specified. The term normal pressure is a natural pressure without pressurization and depressurization, and usually about 1 atmosphere (about 700

to 800 mmHg or so) or so is referred to as normal pressure.

Among the physical properties mentioned in this specification, when humidity affects the result, the relevant physical property is a physical property measured at the humidity which is not particularly controlled at room temperature and normal pressure, unless otherwise specified.

The present application relates to a curable composition. The term curable composition is a composition that can be cured. The curing is a phenomenon in which a composition hardens by a physical and/or chemical reaction.

The curable composition may be of an energy beam curing type, a moisture curing type, a thermal curing type, or a room temperature curing type, or a hybrid curing type in which two or more types of the above curing methods are applied.

The curable composition can be cured by a method of irradiating the composition with energy beams such as ultraviolet rays in the case of the energy beam curing type, by a method of maintaining the composition under appropriate moisture in the case of the moisture curing type, by a method of applying appropriate heat to the composition in the case of the thermal curing type, or by a method of maintaining the curable composition at room temperature in the case of the room temperature curing type, and in the case of the hybrid curing type, two or more methods of the above-described methods can be simultaneously applied or applied in stages to cure the curable composition. In one example, the curable composition of the present application may be of at least a room temperature curing type. For example, the curable composition of the present application can be cured, in a state of being maintained at room temperature, without separate energy beam irradiation and heat application.

The curable composition of the present application may be a one-component curable composition or a two-component curable composition. The one-component curable composition is a composition in which components necessary for curing are stored in a mixed state, and the two-component curable composition is a composition in which components necessary for curing are stored in a physically separated state. The two-component curable composition usually comprises so-called main agent part and curing agent part, and for curing, the main agent and curing agent parts are mixed. When the curable composition of the present application is a two-component curable composition, the curable composition may be a main agent part or a curing agent part of the two-component curable composition, or a mixture of the main agent part and the curing agent part.

The curable composition may form a cured body exhibiting latent heat in a predetermined temperature range. The latent heat is usually defined as a heat quantity required for a substance to cause a state change (phase transition) without any temperature change. However, when the cured body of the present application exhibits the latent heat, it is not always necessary to cause a state change as a whole. The latent heat of the cured body in the present application may occur in the state change process of at least a part of the cured body or the component included in the cured body.

In the present application, the matter that the cured body exhibits latent heat in a predetermined temperature range means that the cured material exhibits an endothermic peak in a predetermined temperature range in a DSC (Differential Scanning Calorimeter) analysis performed in the manner described in Examples to be described below. The process in which the cured body of the present application exhibits the latent heat is an isothermal process. Therefore, the cured body can be applied to a product that generates heat to control the heat while maintaining the temperature of the product uniformly, and the impact of abnormal heating, explosion and/or ignition occurring in one product on other adjacent products can be minimized or prevented.

The lower limit of the latent heat exhibited by the cured body may be 15 J/g, 20 J/g, 25 J/g, 30 J/g, 35 J/g, 40 J/g, 45 J/g, 50 J/g, 55 J/g, 60 J/g, 65 J/g, 70 J/g, 75 J/g, 80 J/g, 85 J/g or 90 J/g or so, and the upper limit thereof may also be 200 J/g, 195 J/g, 190 J/g, 185 J/g, 180 J/g, 175 J/g, 170 J/g, 165 J/g, 160 J/g, 155 J/g, 150 J/g, 145 J/g, 140 J/g, 135 J/g, 130 J/g, 125 J/g, 120 J/g, 115 J/g, 110 J/g, 105 J/g, 100 J/g, 95 J/g, 90 J/g, 85 J/g, 80 J/g, 75 J/g, 70 J/g, 65 J/g, 60 J/g, 55 J/g, 50 J/g, 45 J/g or 40 J/g or so. The latent heat exhibited by the cured body may be more than or not less than any one of the above-described lower limits, or the latent heat exhibited by the cured body may be less than or not more than any one of the above-described upper limits, or the latent heat exhibited by the cured body may be in the range from more than or not less than any one of the above-described lower limits to less than or not more than any one of the above-described upper limits. The cured body exhibiting such latent heat may perform an excellent thermal control function in various applications, and in particular, may stably control heat in a battery module or a battery pack.

A temperature zone in which the cured body exhibits the latent heat may be controlled.

In this specification, the latent heat zone is a temperature zone representing the latent heat, which is a range from the temperature at the left on-set inflection point of the endothermic peak in the endothermic zone, in which the endothermic peak of the DSC (Differential Scanning Calorimeter) analysis of Examples to be described below is identified, to the temperature at the right on-set inflection point of the endothermic peak. In this specification, the temperature at the left on-set inflection point of the endothermic peak may also be called an on-set temperature, and the temperature at the right on-set inflection point of the endothermic peak may also be called an off-set temperature.

In the endothermic zone of the DSC analysis, one, or two or more endothermic peaks can be identified, and even when a plurality of endothermic peaks is observed, the range from the temperature (latent heat zone start temperature or on-set temperature) of the inflection point of the endothermic peak at the point where the first endothermic peak starts to the temperature (latent heat zone end temperature or off-set) of the inflection point of the endothermic peak at the point where the last endothermic peak ends is defined as the latent heat zone.

The concepts of latent heat, latent heat zone, on-set temperature, and off-set temperature are equally applied to the phase change material.

The lower limit of the temperature of the latent heat zone may be 0°C, 5°C, 10°C, 15°C, 20°C, 25°C, 27°C or 30°C or so, and the upper limit thereof may also be 80°C, 78°C, 76°C, 74°C, 72°C, 70°C, 68°C, 66°C, 64°C, 62°C, 60°C, 58°C, 56°C, 54°C, 52°C, 50°C, 48°C, 46°C, 44°C, 42°C or 40°C or so. The latent heat zone may be in the range from more than or not less than any one of the above-described lower limits to less than or not more than any one of the above-described upper limits.

In the cured body, the width of the temperature zone representing the latent heat, that is, the width of the latent heat zone may be adjusted. The width of the latent heat zone is a value obtained by subtracting the latent heat zone start temperature (the on-set temperature) from the latent heat zone end temperature (the off-set temperature). The lower limit of the width of the latent heat zone may be 9°C, 9.5°C, 10°C, 12°C, 14°C, 15°C, 16°C, 18°C or 19°C or so, and the upper limit thereof may also be 60°C, 55°C, 50°C, 45°C, 40°C, 35°C, 30°C, 25°C, 20°C or 15°C or so. The width of the latent heat zone of the latent heat exhibited by the cured body may be more than or not less than any one of the above-described lower limits, or the width of the latent heat zone of the latent heat exhibited by the cured body may be less than or not more than any one of the above-described upper limits, or the width of the latent heat zone of the latent heat exhibited by the cured body may be in the range from more than or not less than any one of the above-described lower limits to less than or not more than any one of the above-described upper limits.

In one example, the on-set temperature of the latent heat zone in which the cured body exhibits the latent heat may be adjusted. At this time, the definition of the on-set temperature is the same as described above. The lower limit of the zone range in which the on-set temperature exists may be 10°C, 12°C, 14°C, 16°C, 18°C, 20°C, 22°C, 24°C, 26°C or 28°C or so, and the upper limit thereof may be 60°C, 58°C, 56°C, 54°C, 52°C, 50°C, 48°C, 46°C, 44°C, 42°C, 40°C, 38°C, 36°C, 34°C, 32°C, 30°C, 28°C or 26°C or so. The on-set temperature may be in the range from more than or not less than any one of the above-described lower limits to less than or not more than any one of the above-described upper limits.

In one example, the off-set temperature of the latent heat zone in which the cured body exhibits the latent heat may be adjusted. At this time, the definition of the off-set temperature is the same as described above. The lower limit of the zone range in which the off-set temperature exists may be 30°C, 32°C, 34°C, 36°C, 38°C, 40°C, 42°C, 44°C, 46°C, 48°C or 50°C or so, and the upper limit thereof may be 80°C, 78°C, 56°C, 74°C, 72°C, 70°C, 68°C, 66°C, 64°C, 62°C, 60°C, 58°C, 56°C, 54°C, 52°C, 50°C, 48°C, 46°C or 44°C or so. The off-set temperature may be in the range from more than or not less than any one of the above-described lower limits to less than or not more than any one of the above-described upper limits.

The cured body having such latent heat characteristics is applied to various heating products, whereby the relevant products can be operated in a stable and uniform temperature range. In addition, the cured body is applied to a product comprising a plurality of elements disposed to be relatively adjacent to each other, whereby the temperature of the entire product can be uniformly maintained, and the impact of the abnormal heat, ignition and/or explosion in any one element on other elements can be minimized or prevented. In particular, the cured body exhibiting the latent heat characteristics is applied to a product (e.g., secondary battery cell, or battery module or battery pack comprising the plurality of cells) whose driving temperature must be maintained within the range of approximately 15°C to 60°C, whereby the heat can be efficiently controlled.

The cured body of the present application may stably maintain such latent heat characteristics for a long period of time. In one example, the curable composition may comprise a so-called phase change material (PCM) so that the cured body exhibits the latent heat characteristics. As the phase change material, a material that absorbs heat while being subjected to phase transition from a solid to a liquid may be used. Since this material is transferred to a liquid phase while exhibiting latent heat, it may be lost from the cured body. Therefore, in this case, the latent heat characteristics may be lost over time. In the present application, even after the phase change material in the cured body is transferred to the liquid phase, it is not lost in the cured body through selection of the curable resin component forming the cured body, adjustment of the degree of crosslinking, adjustment of the type and ratio of the phase change material and/or adjustment of the method for preparing the curable composition, and thus, such latent heat characteristics can be stably maintained for a long period of time.

For example, in the cured body of the present application, $\Delta W$ of Equation 1 below may be controlled within a predetermined range.

[Equation 1]

$$\Delta W = 100 \times (W_f - W_i)/W_i$$

In Equation 1, ΔW is the weight change rate (unit %) of the cured body, Wf is the weight of the cured body measured after maintaining the cured body at 80°C for 24 hours, and Wi is the weight of the cured body before maintaining the cured body at 80° C for 24 hours. A specific method for measuring ΔW in Equation 1 is described in the Examples section. In addition, the units of the weights ($W_f$ and $W_i$) in Equation 1 above are not limited as long as the same units are applied to each other.

The upper limit of the weight change rate (ΔW) may be 10%, 9%, 8%, 7%, 6%, 5%, 4%, 3%, 2%, 1.5%, 1%, or 0.5% or so. The weight change rate may be less than any one of the above-described upper limits, or the upper limit or less. The lower limit of the weight change rate (ΔW) is not particularly limited, because it means that the smaller the value thereof, the more stably the phase change material is maintained in the cured body. The lower limit of the weight change rate (ΔW) may be, for example, 0% or 0.5% or so. The weight change rate (ΔW) may also be in the range from more than or not less than any one of the above-described lower limits to less than or not more than any one of the above-described upper limits.

In the present application, such latent heat characteristic or weight change characteristics can be achieved without applying a so-called composite material as the phase change material. The phase change material exhibits endothermic properties capable of controlling heat, but generally has a poor thermal conductivity. Therefore, it is not easy to transfer the heat to be treated to the phase change material. To this end, a composite material in which a material having a high thermal conductivity, such as graphite or carbon fiber, and a phase change material are complexed is known. Such a material can solve the problem of low thermal conductivity, which is a disadvantage of the phase change material, to some extent, but is disadvantageous in terms of weight reduction because it increases the density or specific gravity of the material. However, in the present application, the problem of lowering thermal control efficiency due to the low thermal conductivity, which is a disadvantage of the phase change material, can be solved through selection of the curable resin component forming the cured body, adjustment of the degree of crosslinking, adjustment of the type and ratio of the phase change material and/or adjustment of the method for preparing the curable composition without using the complexed phase change material, and accordingly, it is possible to provide a lightweight material.

In the present application, such latent heat characteristics or weight change characteristics can be achieved while using a so-called unencapsulated phase change material, that is, a non-encapsulated phase change material as the phase change material. That is, the phase change material is often transferred to a liquid during the phase transition process, where the phase change material transferred to the liquid may easily leak from the cured body. Therefore, in order to prevent leakage of the phase change material, a phase change material in which the phase change material is encapsulated with a material that does not become a liquid phase is usually used. However, in this case, the phase change material has been encapsulated with a material other than the phase change material, so that it is not easy to stably secure the performance of the phase change material. In the present application, as described below, even when a non-encapsulated phase change material is used as the phase change material, the weight change characteristics may be exhibited through the control of the matrix of the cured body.

In one example, the curable composition may comprise, as the phase change material, a non-encapsulated phase change material, and the lower limit of the content of the non-encapsulated phase change material based on the weight of the total phase change material present in the curable composition or the cured body may be 55 weight%, 60 weight%, 65 weight%, 70 weight%, 75 weight%, 80 weight%, 85 weight%, 90 weight% or 95 weight% or so, and the upper limit thereof may be 100 weight%, 99 weight%, 98 weight%, 97 weight%, 96 weight% or 95 weight% or so. The content of the non-encapsulated phase change material may be more than or not less than any one of the above-described lower limits, or the content of the non-encapsulated phase change material may be less than or not more than any one of the above-described upper limits, or the content of the non-encapsulated phase change material may be in the range from more than or not less than any one of the above-described lower limits to less than or not more than any one of the above-described upper limits.

In one example, the cured body may have a density within a predetermined range. Such a density may be controlled in consideration of the possibility of providing a lightweight material. For example, the lower limit of the density may be 0.5 g/cm$^3$, 0.55 g/cm$^3$, 0.6 g/cm$^3$, 0.65 g/cm$^3$, 0.7 g/cm$^3$, 0.75 g/cm$^3$, 0.8 g/cm$^3$, 0.85 g/cm$^3$, 0.9 g/cm$^3$, 0.95 g/cm$^3$, 1 g/cm$^3$, 1.05 g/cm$^3$, 1.1 g/cm$^3$ or 1.15 g/cm$^3$ or so, and the upper limit thereof may also be 2 g/cm$^3$, 1.8 g/cm$^3$, 1.6 g/cm$^3$, 1.5 g/cm$^3$, 1.45 g/cm$^3$, 1.4 g/cm$^3$, 1.35 g/cm$^3$, 1.3 g/cm$^3$, 1.25 g/cm$^3$, 1.2 g/cm$^3$, 1.15 g/cm$^3$, 1.1 g/cm$^3$, 1.05 g/cm$^3$, 1 g/cm$^3$ or 0.95 g/cm$^3$ or so. The density of the cured body may be more than or not less than any one of the above-described lower limits, or the density of the cured body may be less than or not more than any one of the above-described upper limits, or the density of the cured body may be in the range from more than or not less than any one of the above-described lower limits to less than or not more than any one of the above-described upper limits.

In the present application, the hardness of the cured body may be adjusted. The hardness of the cured body is affected by the degree of crosslinking of the cured body. In general, when the degree of crosslinking is dense, the hardness increases, and conversely, the lower the degree of crosslinking, the lower the hardness is measured. In the present application, the degree of crosslinking of the cured body may be adjusted so that the appropriate hardness is exhibited in consideration of the maintenance efficiency of the phase change material maintained in the cured body. If the degree of crosslinking is too low and thus the hardness is too low, the phase change material may not be properly maintained inside the cured body, and conversely, if the degree of crosslinking is too high and thus the hardness is too high, the performance of the phase change material may not be properly expressed.

For example, the lower limit of the hardness of the cured body may be 20, 25, 30, 35, 40, 45, 50, 55, 60, 70 or 80 or so in terms of Shore OO hardness, or may be 10, 15, 20, 25, 30, 35, 40 or 50 or so in terms of Shore A hardness, and the upper limit thereof may be 90, 85, 80, 75, 70, 65 or 60 or so in terms of Shore OO hardness, or may also be 90, 85, 80, 75, 70, 65, 60, 55, 50, 45, 40, 35, 30, 25 or 20 or so in terms of Shore A hardness. The hardness of the cured body may be more than or not less than any one of the above-described lower limits, or the hardness of the cured body may be less than or not more than any one of the above-described upper limits, or the hardness of the cured body may be in the range from more than or not less than any one of the above-described lower limits to less than or not more than any one of the above-described upper limits.

The hardness of the cured body may be determined in relation to the molecular weight and degree of crosslinking, and the like of the curable resin component, and in the present application, the molecular weight of the curable resin component forming the cured body and the degree of crosslinking of the resin component are controlled so that it can exhibit hardness within the above range, whereby it is possible to provide a network capable of stably maintaining the phase change material. In addition, the hardness within the above range enables the cured body to stably fill a space with a complicated shape, and can also improve vibration resistance and impact resistance.

The curable composition of the present application may comprise a curable resin component. The category of the term curable resin component includes a component capable of forming a resin component after curing reaction as well as a case in which it itself is a so-called resin component. Therefore, the curable resin component may be a monomolecular, oligomeric or polymeric compound.

In the present application, as the curable resin component, a component having a weight average molecular weight (Mw) within a predetermined range may be used. The weight average molecular weight of the curable resin component affects the maintenance of the phase change material together with the crosslinked structure. That is, if the weight average molecular weight of the curable resin component connecting the crosslinked structure is too low even under the same or similar degree of crosslinking, the leakage of the phase change material may also occur, so that it may be necessary to secure an appropriate level of weight average molecular weight. For example, the lower limit of the weight average molecular weight of the curable resin component may be 9,000 g/mol, 10,000 g/mol, 15,000 g/mol, 20,000 g/mol or 25,000 g/mol or so, and the upper limit thereof may also be 1,000,000 g /mol, 900,000 g/mol, 800,000 g/mol, 700,000 g/mol, 600,000 g/mol, 500,000 g/mol, 400,000 g/mol, 300,000 g/mol, 200,000 g/mol, 100,000 g/mol, 90,000 g It may be on the order of /mol, 80,000 g/mol, 70,000 g/mol, 60,000 g/mol, 50,000 g/mol, 40,000 g/mol or 30,000 g/mol or so. The curable resin component having such molecular weight characteristics can form the network of the cured body in which the phase change material can be stably maintained therein. In particular, as the resin component having the above molecular weight characteristics, a silicone resin component may be effectively applied. The weight average molecular weight may be more than or not less than any one of the above-described lower limits, or the weight average molecular weight may be less than or not more than any one of the above-described upper limits, or the weight average molecular weight may be in the range from more than or not less than any one of the above-described lower limits to less than or not more than any one of the above-described upper limits.

There is no particular limitation on the type of the curable resin component. In one example, the curable resin component may include a polyurethane component, a silicone resin component, an acrylic resin component, or an epoxy resin component. The polyurethane component, silicone resin component, acrylic resin component or epoxy resin component may be polyurethane, silicone resin, acrylic resin or epoxy resin, or may be a component forming the polyurethane, silicone resin, acrylic resin or epoxy resin through the curing reaction. There is no particular limitation on specific types of the applicable curable resin component, and one exhibiting the molecular weight characteristics and/or hardness characteristics as described above may be selected and used among known polyurethane components, silicone resin components, acrylic resin components or epoxy resin components, and by controlling the degree of crosslinking of the resin component, it is also possible to control the hardness of the final cured product.

For example, when the curable resin component is a silicone resin component, the component is an addition-curable silicone resin component, which may include (1) a polyorganosiloxane containing two or more alkenyl groups in the molecule, and (2) a polyorganosiloxane containing two or more silicon-bonded hydrogen atoms in the molecule. The compound may form a cured product by addition reaction in the presence of a catalyst such as a platinum catalyst.

The (1) polyorganosiloxane contains at least two alkenyl groups. At this time, a specific example of the alkenyl group includes a vinyl group, an allyl group, a butenyl group, a pentenyl group, a hexenyl group or a heptenyl group,

and the like, and a vinyl group of the foregoing is usually applied, but is not limited thereto. In the (1) polyorganosiloxane, the bonding position of the above-described alkenyl group is not particularly limited. For example, the alkenyl group may be bonded to the end of the molecular chain and/or to the side chain of the molecular chain. In addition, in the (1) polyorganosiloxane, the type of the substituent that may be included in addition to the above-described alkenyl group may include an alkyl group such as a methyl group, an ethyl group, a propyl group, a butyl group, a pentyl group, a hexyl group, or a heptyl group; an aryl group such as a phenyl group, a tolyl group, a xylyl group, or a naphthyl group; an aralkyl group such as a benzyl group or a phenethyl group; and a halogen-substituted alkyl group such as a chloromethyl group, a 3-chloropropyl group, or a 3,3,3-trifluoropropyl group, and the like, and a methyl group or a phenyl group of the foregoing is usually applied, but is not limited thereto.

The molecular structure of the (1) polyorganosiloxane is not particularly limited, which may also have, for example, any shape, such as a linear, branched, cyclic, network, or partially branched linear structure. In general, one having a linear molecular structure of such molecular structures is usually applied, but is not limited thereto.

A more specific example of the polyorganosiloxane (1) may include a dimethylsiloxane-methylvinylsiloxane copolymer blocked with trimethylsiloxane groups at both ends of the molecular chain, methylvinylpolysiloxane blocked with trimethylsiloxane groups at both ends of the molecular chain, a dimethylsiloxane-methylvinylsiloxane-methylphenylsiloxane copolymer blocked with trimethylsiloxane groups at both ends of the molecular chain, dimethylpolysiloxane blocked with dimethylvinylsiloxane groups at both ends of the molecular chain, methylvinylpolysiloxane blocked with dimethylvinylsiloxane groups at both ends of the molecular chain, a dimethylsiloxane-methylvinylsiloxane copolymer blocked with dimethylvinylsiloxane groups at both ends of the molecular chain, a dimethylsiloxane-methylvinylsiloxane-methylphenylsiloxane copolymer blocked with dimethylvinylsiloxane groups at both ends of the molecular chain, a polyorganosiloxane copolymer comprising a siloxane unit represented by $R^1{}_2SiO_{2/2}$ and a siloxane unit represented by $R^1{}_2R^2SiO_{1/2}$ and a siloxane unit represented by $SiO_{4/2}$, a polyorganosiloxane copolymer comprising a siloxane unit represented by $R^1{}_2R^2SiO_{1/2}$ and a siloxane unit represented by $SiO_{4/2}$, a polyorganosiloxane copolymer comprising a siloxane unit represented by $R^1R^2SiO_{2/2}$ and a siloxane unit represented by $R^1SiO_{3/2}$ or a siloxane unit represented by $R^2SiO_{3/2}$, and a mixture of two or more of the foregoing, but is not limited thereto. Here, $R^1$ is a hydrocarbon group other than the alkenyl group, which may be, specifically, an alkyl group such as a methyl group, an ethyl group, a propyl group, a butyl group, a pentyl group, a hexyl group, or a heptyl group; an aryl group such as a phenyl group, a tolyl group, a xylyl group, or a naphthyl group; an aralkyl group such as a benzyl group or a phenethyl group; a halogen-substituted alkyl group such as a chloromethyl group, a 3-chloropropyl group, or a 3,3,3-trifluoropropyl group, and the like. In addition, here, $R^2$ is an alkenyl group, which may be, specifically, a vinyl group, an allyl group, a butenyl group, a pentenyl group, a hexenyl group, or a heptenyl group, and the like.

In the addition-curable silicone composition, (2) polyorganosiloxane may serve to crosslink the (1) polyorganosiloxane. In the (2) polyorganosiloxane, the bonding position of the hydrogen atom is not particularly limited, and for example, it may be bonded to the terminal and/or side chain of the molecular chain. In addition, in the (2) polyorganosiloxane, the type of the substituent that may be included other than the silicon-bonded hydrogen atoms is not particularly limited, which may include, for example, an alkyl group, an aryl group, an aralkyl group or a halogen-substituted alkyl group, and the like, as mentioned in (1) polyorganosiloxane, and a methyl group or a phenyl group of the foregoing is usually applied, but is not limited thereto.

The molecular structure of the (2) polyorganosiloxane is not particularly limited, which may also have, for example, any shape, such as a linear, branched, cyclic, network, or partially branched linear structure. In general, one having a linear molecular structure of such molecular structures is usually applied, but is not limited thereto.

A more specific example of the (2) polyorganosiloxane may include methylhydrogenpolysiloxane blocked with trimethylsiloxane groups at both ends of the molecular chain, a dimethylsiloxane-methylhydrogen copolymer blocked with trimethylsiloxane groups at both ends of the molecular chain, a dimethylsiloxane-methylhydrogensiloxane-methylphenylsiloxane copolymer blocked with trimethylsiloxane groups at both ends of the molecular chain, dimethylpolysiloxane blocked with dimethylhydrogensiloxane groups at both ends of the molecular chain, a dimethylsiloxane-methylphenylsiloxane copolymer blocked with dimethylhydrogensiloxane groups at both ends of the molecular chain, methylphenylpolysiloxane blocked with dimethylhydrogensiloxane groups at both ends of the molecular chain, a polyorganosiloxane copolymer comprising a siloxane unit represented by $R^1{}_3SiO_{1/2}$, a siloxane unit represented by $R^1{}_2HSiO_{1/2}$ and a siloxane unit represented by $SiO_{4/2}$, a polyorganosiloxane copolymer comprising a siloxane unit represented by $R^1{}_2HSiO_{1/2}$ and a siloxane unit represented by $SiO_{4/2}$, a polyorganosiloxane copolymer comprising a siloxane unit represented by $R^1HSiO_{2/2}$ and a siloxane unit represented by $R^1SiO_{3/2}$ or a siloxane unit represented by $HSiO_{3/2}$ and a mixture of two or more of the foregoing, but is not limited thereto. Here, $R^1$ is a hydrocarbon group other than the alkenyl group, which may be, specifically, an alkyl group such as a methyl group, an ethyl group, a propyl group, a butyl group, a pentyl group, a hexyl group, or a heptyl group; an aryl group such as a phenyl group, a tolyl group, a xylyl group, or a naphthyl group; an aralkyl group such as a benzyl group or a phenethyl group; a halogen-substituted alkyl group such as a chloromethyl group, a 3-chloropropyl group, or a 3,3,3-trifluoropropyl group, and the like.

The content of the (2) polyorganosiloxane is not particularly limited as long as it is included to the extent that

appropriate curing can be achieved. For example, the (2) polyorganosiloxane may be included in an amount such that 0.5 to 10 silicon-bonded hydrogen atoms are present with respect to one alkenyl group included in the aforementioned (1) polyorganosiloxane. In this range, the curing can sufficiently proceed and the heat resistance can be ensured.

The addition-curable silicone resin component may further comprise platinum or a platinum compound as the catalyst for curing. A specific type of such platinum or platinum compound is not particularly limited. The ratio of the catalyst may also be adjusted to a level at which proper curing can be achieved.

In another example, the silicone resin component is a condensation-curable silicone resin component, which may comprise, for example, (a) an alkoxy group-containing siloxane polymer; and (b) a hydroxyl group-containing siloxane polymer.

The (a) siloxane polymer may be, for example, a compound represented by the following formula 1.

[Formula 1] $R^1_aR^2_bSiO_c(OR^3)_d$

In Formula 1, $R^1$ and $R^2$ each independently represent a hydrogen atom or a substituted or unsubstituted monovalent hydrocarbon group, $R^3$ represents an alkyl group, where if pluralities of $R^1$, $R^2$ and $R^3$ are each present, they may be the same or different from each other, and a and b each independently represent a number of 0 or more and less than 1, a+b represents a number of more than 0 and less than 2, c represents a number of more than 0 and less than 2, d represents a number of more than 0 and less than 4, and $a+b+c\times2+d$ is 4.

In the definition of Formula 1, the monovalent hydrocarbon may be, for example, an alkyl group with 1 to 8 carbon atoms, a phenyl group, a benzyl group, or a tolyl group, and the like, where the alkyl group with 1 to 8 carbon atoms may be a methyl group, an ethyl group, a propyl group, an isopropyl group, a butyl group, a pentyl group, a hexyl group, a heptyl group or an octyl group, and the like. In addition, in the definition of Formula 1, the monovalent hydrocarbon group may be substituted with, for example, a known substituent such as halogen, an amino group, a mercapto group, an isocyanate group, a glycidyl group, a glycidoxy group, or a ureido group.

In the definition of Formula 1, an example of the alkyl group in $R^3$ may include a methyl group, an ethyl group, a propyl group, an isopropyl group, or a butyl group, and the like. Among the alkyl groups, a methyl group or an ethyl group, and the like is usually applied, without being limited thereto.

Among the polymers of Formula 1, branched or tertiarily crosslinked siloxane polymers may be used. In addition, in this (a) siloxane polymer, the hydroxyl groups may remain within the range without impairing the purpose, specifically, within the range without inhibiting a dealcoholization reaction.

The (a) siloxane polymer can be produced, for example, by hydrolyzing and condensing polyfunctional alkoxysilane or polyfunctional chlorosilane, and the like. An average person skilled in the art can easily select an appropriate polyfunctional alkoxysilane or chlorosilane according to the desired (a) siloxane polymer, and can also easily control the conditions of the hydrolysis and condensation reaction using the same. Meanwhile, at the time of producing the (a) siloxane polymer, according to the purpose, an appropriate monofunctional alkoxysilane may also be used in combination.

As the (a) siloxane polymer, for example, commercially available organosiloxane polymers such as Shin-Etsu Silicone's X40-9220 or X40-9225, GE Toray Silicones' XR31-B1410, XR31-B0270 or XR31-B2733, and the like may be used.

As the (b) hydroxyl group-containing siloxane polymer included in the condensation-curable silicone composition, for example, a compound represented by the following formula 2 may be used.

[Formula 2]

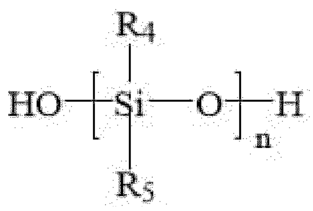

In Formula 2, $R_4$ and $R_5$ each independently represent a hydrogen atom or a substituted or unsubstituted monovalent hydrocarbon group, where if pluralities of $R_4$ and $R_5$ are each present, they may be the same or different from each other, and n represents an integer of 5 to 2,000.

In the definition of Formula 2, a specific type of the monovalent hydrocarbon group may include, for example, the same hydrocarbon group as in the case of Formula 1.

The (b) siloxane polymer can be produced, for example, by hydrolyzing and condensing dialkoxysilane and/or dichlorosilane. An average person skilled in the art can easily select an appropriate dialkoxy silane or dichlorosilane

according to the desired (b) siloxane polymer, and can also easily control the conditions of the hydrolysis and condensation reaction using the same. As the (b) siloxane polymer, for example, commercially available bifunctional organosiloxane polymers such as GE Toray Silicones' XC96-723, YF-3800, or YF-3804 may be used.

The above-described addition curing type or condensation curing type silicone composition is one example of the silicone resin component applied in the present application.

In another example, if the curable resin component is a polyurethane component, the component may comprise at least a polyol and a polyisocyanate. Here, the polyol is a compound containing at least two hydroxyl groups, and the polyisocyanate is a compound containing at least two isocyanate groups. These compounds may each be a monomolecular, oligomeric or polymeric compound.

There is no great limitation on the type of the applicable polyol, and for example, a known polyether polyol or polyester polyol may be applied. Here, as the polyether polyol, polyalkylene glycol, in which the alkylene glycol moiety has 1 to 20, 1 to 16, 1 to 12, 1 to 8, or 1 to 4 carbon atoms, such as polypropylene glycol or polyethylene glycol, or ethylene oxide/propylene oxide copolymer-based polyol, PTME (poly(tetramethylene glycol)), PHMG (poly(hexamethylene ether glycol)), and the like are known. Also, as the polyester polyol, a polyol synthesized from dibasic acid and glycol, such as polyester polyol or polycaprolactone polyol (obtained from ring-opening polymerization of cyclic lactone) containing the dibasic acid unit and glycol unit, and the like are known. Furthermore, in addition to such polyols, hydrocarbon-based polyols such as carbonate-based polyols, vegetable polyol castor oil, HTPB (hydroxyl-terminated polybutadiene), or HTPIB (hydroxyl-terminated polyisobutylene) are also known.

In the present application, an appropriate kind may be selected and used among the known polyols as above.

As the polyisocyanate, an appropriate kind may be selected and used among known aromatic or aliphatic polyisocyanate compounds.

The lower limit of the content of the curable resin component in the curable composition may be, based on the total weight of the curable composition, 30 weight%, 35 weight%, 40 weight%, 45 weight%, 50 weight%, 55 weight%, 60 weight%, 65 weight%, 70 weight%, 75 weight% or 80 weight% or so, and the upper limit thereof may be less than 100 weight%, 95 weight%, 90 weight%, 85 weight%, 80 weight%, 75 weight%, 70 weight%, 65 weight%, 60 weight% or 55 weight% or so. The content may be more than or not less than any one of the above-described lower limits, or the content may be less than or not more than any one of the above-described upper limits, or the content may be in the range from more than or not less than any one of the above-described lower limits to less than or not more than any one of the above-described upper limits. The content is based on the total weight of the curable composition, provided that when the curable composition includes a filler and/or a solvent, it is a ratio based on the total weight of the curable composition excluding the filler and the solvent.

The curable composition may comprise a so-called phase change material (PCM) in order to secure the above-described latent heat characteristics. The phase change material is a material that is endothermic or exothermic in a phase transition process, as is known. The phase transition process is an isothermal process.

The phase transition in which the phase change material is endothermic or exothermic may be a phase transition from a solid to a solid, a phase transition from a solid to a liquid, a phase transition from a solid to a gas, or a phase transition from a liquid to a gas. The above-described phase change reaction (solid $\rightarrow$ solid, solid $\rightarrow$ liquid, solid $\rightarrow$ gas, liquid $\rightarrow$ gas) may be an endothermic reaction. The material having a phase transition from a solid to a liquid is advantageous in terms of efficiency, but such a material becomes a liquid phase after the phase transition, so that it is difficult to be maintained in the cured body. However, the cured body of the present application exhibits the above-described weight change rate, and thus a material that undergoes a phase transition from a solid to a liquid may be applied. Accordingly, the phase change material applied in the present application may be a material in which a phase transition occurs between a solid phase and a liquid phase, and may be a material that the phase transition reaction from the solid phase to the liquid phase may be an endothermic reaction.

The phase change material applied in the present application may have a melting point in a predetermined range. For example, the lower limit of the melting point may be 20°C, 25°C, 30°C, 35°C, 40°C, 45°C or 50°C or so, and the upper limit thereof may also be 100°C, 95°C, 90°C, 85°C, 80°C, 75°C, 70°C, 65°C, 60°C, 55°C, 50°C, 45°C or 40°C or so. The melting point may be more than or not less than any one of the above-described lower limits, or the melting point may be less than or not more than any one of the above-described upper limits, or the melting point may be in the range from more than or not less than any one of the above-described lower limits to less than or not more than any one of the above-described upper limits.

The lower limit of the content of the phase change material having the above-described melting point among all the phase change materials included in the curable composition of the present application for securing appropriate temperature control characteristics may be 55 weight%, 60 weight%, 65 weight%, 70 weight%, 75 weight%, 80 weight%, 85 weight%, 90 weight% or 95 weight% or so, and the upper limit thereof may be 100 weight%, 99 weight%, 98 weight%, 97 weight%, 96 weight% or 95 weight% or so. The content may be more than or not less than any one of the above-described lower limits, or the content may be less than or not more than any one of the above-described upper limits, or the content may be in the range from more than or not less than any one of the above-described lower limits to less

than or not more than any one of the above-described upper limits.

In another example, the curable composition may also comprise, as the phase change material, only a phase change material having a melting point in the above range.

As the phase change material, one exhibiting latent heat in a predetermined range in a predetermined temperature zone may be used.

For example, the lower limit of the latent heat exhibited by the phase change material may be 100 J/g, 110 J/g, 120 J/g, 130 J/g, 140 J/g, 150 J/g, 160 J/g, 170 It may be on the order of J/g or 180 J/g or so, and the upper limit thereof may be 400 J/g, 380 J/g, 360 J/g, 340 J/g, 320 J/g, 300 J/g, 280 J/g, 260 J/g, 240 J/g, 220 J/g, 200 J/g, 180 J/g or 160 J/g or so. The latent heat may be more than or not less than any one of the above-described lower limits, or the latent heat may be less than or not more than any one of the above-described upper limits, or the latent heat may be in the range from more than or not less than any one of the above-described lower limits to less than or not more than any one of the above-described upper limits.

The lower limit of the temperature zone in which the phase change material exhibits the latent heat may be 10°C, 15°C, 20°C, 25°C, 30°C, 35°C, 40°C, 45°C or 50°C or so, and the upper limit may be 100°C, 95°C, 90°C, 85°C, 80°C, 75°C, 70°C, 65°C, 60°C, 55°C, 50°C, 45°C or 40°C or so. The temperature zone exhibiting the latent heat may be more than or not less than any one of the above-described lower limits, or the temperature zone exhibiting the latent heat may be less than or not more than any one of the above-described upper limits, or the temperature zone exhibiting the latent heat may be in the range from more than or not less than any one of the above-described lower limits to less than or not more than any one of the above-described upper limits.

The lower limit of the content of the phase change material having the above-described latent heat property among all the phase change materials included in the curable composition of the present application for securing appropriate temperature control characteristics may be 55 weight%, 60 weight%, 65 weight%, 70 weight%, 75 weight%, 80 weight%, 85 weight%, 90 weight% or 95 weight% or so, and the upper limit thereof may be 100 weight%, 99 weight%, 98 weight%, 97 weight%, 96 weight% or 95 weight% or so. The content may be more than or not less than any one of the above-described lower limits, or the content may be less than or not more than any one of the above-described upper limits, or the content may be in the range from more than or not less than any one of the above-described lower limits to less than or not more than any one of the above-described upper limits.

In another example, the curable composition may comprise, as the phase change material, only a phase change material having the above-described latent heat characteristics.

A desired cured body may be formed through the application of the phase change material as above.

As the phase change material, a known material may be applied as long as it exhibits the above-described properties. As the phase change material, an inorganic material, an organic material, or a eutectic material is known. Among these materials, as the material having the above-described latent heat characteristics, an organic phase change material may be used.

As the organic phase change material, fatty acid, alcohol, ketone, D-lactic acid, or a paraffin-based material is known, and in the present application, one or a mixture of two or more of the materials may be used.

The fatty acid may be exemplified by formic acid, n-octanoic acid, lauric acid or palmitic acid, stearic acid, and the like; the alcohol-based phase change material may be exemplified by glycerin, polyethylene glycol (PEG), xylitol or erythritol, and the like; and the ketone-based phase change material may be exemplified by 2-pentadecanone or 4-heptadecanone, and the like.

As the phase change material, a paraffin-based material may be used. As the paraffin-based phase change material, n-heptadecane, n-octadecane, n-nonadecane, n-Eicosane, n-heny n-henicosane, n-docosane, n-tricosane, n-pentacosane, n-hexacosane, n-heptacosane, n-octacosane, n-nonacosane, n-triacontane, n-hentriacontane, n-dotriacontane, n-triatriacontane, or other higher paraffins (Paraffin $C_{16}$~$C_{18}$, Paraffin $C_{13}$~$C_{24}$, RT 35 HC, Paraffin $C_{16}$~$C_{28}$, Paraffin $C_{20}$~$C_{33}$, Paraffin $C_{22}$~$C_{45}$, Paraffin $C_{22}$~$C_{50}$, Paraffin natural wax 811, Paraffin natural wax 106, etc.) are known.

In the present application, an appropriate kind may be selected and used among the known paraffin-based materials.

In the present application, as the phase change material, paraffin having a melting point in the above-described range and having 5 or more carbon atoms may be used in order to achieve an appropriate effect. In another example, the carbon number of the paraffin may be in the range of 5 to 40 or 10 to 30. This paraffin may be an alkane having the above carbon number.

In one example, as the paraffin-based material, one or more selected from the group consisting of n-nonadecane, n-docosane, n-eicosane, n-heneicosane, n-tricosane, n-tetracosane, n-pentacosane, n-hexacosane, n-heptacosane, lauric acid and myristic acid may be used.

In the present application, for the implementation of appropriate properties, as the phase change material, two or more of the above-described types may be applied.

In one example, the curable composition may comprise, as the phase change material, different types of first and second phase change materials.

For example, the curable composition may comprise, as the phase change material, a first phase change material having a melting point of more than 40°C and a second phase change material having a melting point of 40°C or less.

The lower limit of the melting point of the first phase change material may be 40°C, 41°C, 42°C, 43°C or 44°C or so, and the upper limit thereof may also be 100°C, 95°C, 90°C, 85°C, 80°C, 75°C, 70°C, 65°C, 60°C, 55°C, 50°C or 45°C or so. The melting point of the first phase change material may be more than or not less than any one of the above-described lower limits, or the melting point of the first phase change material may be less than or not more than any one of the above-described upper limits, or the melting point of the first phase change material may be in the range from more than or not less than any one of the above-described lower limits to less than or not more than any one of the above-described upper limits.

The upper limit of the melting point of the second phase change material may be 40°C, 39°C, 38°C, or about 37.5°C or so, and the lower limit thereof may be 25°C, 30°C or 35°C or so. The melting point of the second phase change material may be more than or not less than any one of the above-described lower limits, or the melting point of the second phase change material may be less than or not more than any one of the above-described upper limits, or the melting point of the second phase change material may be in the range from more than or not less than any one of the above-described lower limits to less than or not more than any one of the above-described upper limits.

The lower limit of the difference between the melting points of the first phase change material and the second phase change material may be 1°C, 2°C, 3°C, 4°C, 5°C, 6°C, 7°C or 8°C or so, and the upper limit may be 20°C, 19°C, 18°C, 17°C, 16°C, 15°C, 14°C, 13°C, 12°C, 11°C, 10°C, 9°C or 8°C or so. The difference in the melting point is a value obtained by subtracting the melting point of the second phase change material from the melting point of the first phase change material. The difference in the melting points may be more than or not less than any one of the above-described lower limits, or the difference in the melting points may be less than or not more than any one of the above-described upper limits, or the difference in the melting points may be in the range from more than or not less than any one of the above-described lower limits to less than or not more than any one of the above-described upper limits.

The first and second phase change materials may each exhibit latent heat within a predetermined range. For example, the lower limit of the latent heat of each of the first and second phase change materials may be 100 J/g, 110 J/g, 120 J/g, 130 J/g, 140 J/g, 150 J/g, 160 J /g, 170 J/g or 180 J/g or so, and the upper limit may also be 400 J/g, 380 J/g, 360 J/g, 340 J/g, 320 J/g, 300 J/g, 280 J/g, 260 J/g, 240 J/g, 220 J/g, 200 J/g, 180 J/g or 160 J/g or so. The latent heat may be more than or not less than any one of the above-described lower limits, or the latent heat may be less than or not more than any one of the above-described upper limits, or the latent heat may be in the range from more than or not less than any one of the above-described lower limits to less than or not more than any one of the above-described upper limits.

The first and second phase change materials may be selected such that the latent heat of the first phase change material and the latent heat of the second phase change material are different from each other, and the absolute value of the difference is within a predetermined range. The latent heat difference is a value calculated by Equation 2 below when the latent heat of the material having a larger latent heat in the first and second phase change materials is A, and the latent heat of the material having a lower latent heat is B.

[Equation 2]

$$\text{Latent heat difference} = 100 \times (A - B)/B$$

The upper limit of the absolute value of the latent heat difference may be 100%, 95%, 90%, 85%, 80%, 75%, 70%, 65%, 60%, 55%, 50%, 45%, 40%, 35%, 30%, 25%, 20% or 15% or so, and the lower limit thereof may also be 0%, 5%, or 10% or so. The absolute value of the latent heat difference may be more than or not less than any one of the above-described lower limits, or the absolute value of the latent heat difference may be less than or not more than any one of the above-described upper limits, or the absolute value of the latent heat difference may be in the range from more than or not less than any one of the above-described lower limits to less than or not more than any one of the above-described upper limits.

By selecting a phase change material so that such characteristics are satisfied, a desired cured body can be formed more effectively.

In order to secure appropriate properties, the first and second phase change materials may be selected such that the first phase change material has a higher on-set temperature than that of the second phase change material.

In this case, the lower limit of the absolute value of the on-set temperature difference may be 1°C, 2°C, 3°C, 4°C, 5°C, 6°C, 7°C, 8°C or 9°C or so, and the upper limit thereof may be 20°C, 19°C, 18°C, 17°C, 16°C, 15°C, 14°C, 13°C, 12°C, 11°C or 10°C or so. The absolute value of the on-set temperature difference may be more than or not less than any one of the above-described lower limits, or the absolute value of the on-set temperature difference may be

less than or not more than any one of the above-described upper limits, or the absolute value of the on-set temperature difference may be in the range from more than or not less than any one of the above-described lower limits to less than or not more than any one of the above-described upper limits.

Here, the lower limit of the on-set temperature of the first phase change material may be 10°C, 15°C, 20°C, 25°C, 30°C, 35°C or 40°C or so, and the upper limit thereof may be 80°C, 75°C, 70°C, 65°C, 60°C, 55°C, 50°C or 45°C or so. The on-set temperature may be may be more than or not less than any one of the above-described lower limits, or the on-set temperature may be less than or not more than any one of the above-described upper limits, or the on-set temperature may be in the range from more than or not less than any one of the above-described lower limits to less than or not more than any one of the above-described upper limits.

Here, the latent heat zone (difference between the off-set temperature and the on-set temperature) of the first phase change material may be narrower than the latent heat zone (difference between the off-set temperature and the on-set temperature) of the second phase change material.

In the above case, the lower limit of the absolute value of the difference between the latent heat zone of the first phase change material and the latent heat zone of the second phase change material may be 0.4°C, 0.6°C, 0.8°C, 1°C, 1.1°C, 1.2°C, 1.3°C, 1.4°C, 1.5°C, 1.6°C or 1.7°C or so, and the upper limit thereof may be 10°C, 9°C, 8°C, 7°C, 6°C, 5°C, 4°C, 3°C, or 2°C or so. The absolute value may be more than or not less than any one of the above-described lower limits, or the absolute value may be less than or not more than any one of the above-described upper limits, or the absolute value may be in the range from more than or not less than any one of the above-described lower limits to less than or not more than any one of the above-described upper limits.

In the above case, the lower limit of the latent heat zone of the first phase change material may be 0.5°C, 1°C, 1.5°C, 2°C, 2.5°C, 3°C, 3.5°C, 4°C, 4.5°C, 5°C or 5.5°C or so, and the upper limit thereof may be 20°C, 18°C, 16°C, 14°C, 12°C, 10°C, 8°C or 6°C or so. The latent heat zone of the first phase change material may be more than or not less than any one of the above-described lower limits, or the latent heat zone of the first phase change material may be less than or not more than any one of the above-described upper limits, or the latent heat zone of the first phase change material may be in the range from more than or not less than any one of the above-described lower limits to less than or not more than any one of the above-described upper limits.

Here, the first phase change material may have a higher latent heat than the second phase change material. For example, the lower limit of the latent heat of the first phase change material may be 100 J/g, 110 J/g, 120 J/g, 130 J/g, 140 J/g, 150 J/g, 160 J/g, 170 J/g or 180 J/g or so, and the upper limit thereof may also be 400 J/g, 380 J/g, 360 J/g, 340 J/g, 320 J/g, 300 J/g, 280 J/g g, 260 J/g, 240 J/g, 220 J/g, 200 J/g, 180 J/g or 160 J/g or so. The latent heat may be more than or not less than any one of the above-described lower limits, or the latent heat may be less than or not more than any one of the above-described upper limits, or the latent heat may be in the range from more than or not less than any one of the above-described lower limits to less than or not more than any one of the above-described upper limits.

In the above state, the first and second phase change materials may have the absolute value of the above-described difference (Equation 2 above).

That is, the upper limit of the absolute value of the latent heat difference between the first and second phase change materials may be 100%, 95%, 90%, 85%, 80%, 75%, 70%, 65%, 60%, 55%, 50%, 45%, 40%, 35%, 30%, 25%, 20% or 15% or so, and the lower limit thereof may also be 0%, 5%, or 10% or so. The absolute value of the latent heat difference may be more than or not less than any one of the above-described lower limits, or the absolute value of the latent heat difference may be less than or not more than any one of the above-described upper limits, or the absolute value of the latent heat difference may be in the range from more than or not less than any one of the above-described lower limits to less than or not more than any one of the above-described upper limits.

By selecting the first and second phase change materials as above, it is possible to secure stable temperature control performance in the desired temperature zone. For example, when the temperature is gradually or rapidly increased due to abnormal heating or ignition of the product, the material having the low on-set temperature among the first and second phase change materials can sequentially act with another material, and the desired effect can be exhibited by their respective latent heat characteristics.

The lower limit of the total content of the first and second phase change materials among all the phase change materials included in the curable composition of the present application for securing appropriate temperature control characteristics may be 55 weight%, 60 weight%, 65 weight%, 70 weight%, 75 weight%, 80 weight%, 85 weight%, 90 weight% or 95 weight% or so, the upper limit thereof may be 100 weight%, 99 weight%, 98 weight%, 97 weight%, 96 weight% or 95 weight% or so. The content may be more than or not less than any one of the above-described lower limits, or the content may be less than or not more than any one of the above-described upper limits, or the content may be in the range from more than or not less than any one of the above-described lower limits to less than or not more than any one of the above-described upper limits.

The lower limit of the content of the phase change material relative to 100 parts by weight of the curable resin component as the content of the phase change material in the curable composition may be 20 parts by weight, 21 parts

by weight, 22 parts by weight, 23 parts by weight, 24 parts by weight, 25 parts by weight, 26 parts by weight, 27 parts by weight, 28 parts by weight, 29 parts by weight, or 30 parts by weight or so, and the upper limit thereof may also be 75 parts by weight, 74 parts by weight, 73 parts by weight, 72 parts by weight, 71 parts by weight, 70 parts by weight, 69 parts by weight, 68 parts by weight, 67 parts by weight, 66 parts by weight, 65 parts by weight, 64 parts by weight, 63 parts by weight, 62 parts by weight, 61 parts by weight, 60 parts by weight, 59 parts by weight, 58 parts by weight, 57 parts by weight, 56 parts by weight, 55 parts by weight, 54 parts by weight, 53 parts by weight, 52 parts by weight, 51 parts by weight, 50 parts by weight, 49 parts by weight, 48 parts by weight, 47 parts by weight, 46 parts by weight, 45 parts by weight parts by weight, 44 parts by weight, 43 parts by weight, 42 parts by weight, 41 parts by weight, 40 parts by weight, 39 parts by weight, 38 parts by weight, 37 parts by weight, 36 parts by weight, 35 parts by weight, 34 parts by weight, 33 parts by weight or 32 parts by weight or so. The content may be more than or not less than any one of the above-described lower limits, or the content may be less than or not more than any one of the above-described upper limits, or the content may be in the range from more than or not less than any one of the above-described lower limits to less than or not more than any one of the above-described upper limits.

If the first and second phase change materials are applied as the phase change material, the lower limit of the content of the second phase change material relative to 100 parts by weight of the first phase change material may be 6 parts by weight, 7 parts by weight, 8 parts by weight, 9 parts by weight, 10 parts by weight, 11 parts by weight, 12 parts by weight, 13 parts by weight, 14 parts by weight, 15 parts by weight, 16 parts by weight, 17 parts by weight, 18 parts by weight, 19 parts by weight, 20 parts by weight, 21 parts by weight, 22 parts by weight, 23 parts by weight, 24 parts by weight, 25 parts by weight, 26 parts by weight, 27 parts by weight, 28 parts by weight, 29 parts by weight, 30 parts by weight, 31 parts by weight, 32 parts by weight, 33 parts by weight or 34 parts by weight or so, and the upper limit thereof may also be 95 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight, 30 parts by weight, 25 parts by weight, 20 parts by weight or 15 parts by weight or so. The content may be more than or not less than any one of the above-described lower limits, or the content may be less than or not more than any one of the above-described upper limits, or the content may be in the range from more than or not less than any one of the above-described lower limits to less than or not more than any one of the above-described upper limits.

The curable composition may comprise, as an optional additional component, a filler, for example a thermally conductive filler. Such a filler can compensate for the low thermal conductivity of the phase change material.

The thermally conductive filler is not particularly limited, which may be exemplified by, for example, an inorganic filler such as aluminum hydroxide ($Al(OH)_3$), magnesium hydroxide ($Mg(OH)_2$), calcium hydroxide ($Ca(OH)_2$), boehmite (AlOOH), hydromagnesite, magnesia, alumina, aluminum nitride (AlN), boron nitride (BN), silicon nitride ($Si_3N_4$), silicon carbide (SiC), zinc oxide (ZnO) or beryllium oxide (BeO), but is not limited thereto. One or two or more may be selected from the above fillers. When a low-density cured body is to be formed, a filler having a small specific gravity (e.g., aluminum hydroxide, etc.) may be selected among the filler components.

Here, the shape of the filler is not particularly limited, and, for example, spherical, needle-shaped, plate-shaped or other amorphous fillers may be used.

In one example, as the filler, a filler having an average particle diameter in a range of 10 μm to 200 μm may be used. The average particle diameter is a D50 particle diameter measured in the manner described in Examples to be described below. Through the application of the filler having such a particle diameter, it is possible to more efficiently secure the desired effect.

In another example, the particle diameter of the filler may be 15 μm or more, 20 μm or more, 25 μm or more, 30 μm or more, 35 μm or more, or 40 μm or more, or may also be 180 μm or less, 160 μm or less, 140 μm or less, 120 μm or less, 100 μm or less, 80 μm or less, 60 μm or less, or 50 μm or less or so.

The content of the thermally conductive filler in the curable composition is adjusted according to the purpose. For example, in the curable composition, the thermally conductive filler may be included in an amount of about 200 parts by weight or less relative to 100 parts by weight of the curable resin component. In another example, the ratio may be 195 parts by weight or less, 190 parts by weight or less, 185 parts by weight or less, 180 parts by weight or less, 175 parts by weight or less, 170 parts by weight or less, 165 parts by weight or less, 160 parts by weight or less, 155 parts by weight or less, 150 parts by weight or less, 145 parts by weight or less, 140 parts by weight or less, 135 parts by weight or less, 130 parts by weight or less, 125 parts by weight or less, 120 parts by weight or less, 115 parts by weight or less, 110 parts by weight or less, 105 parts by weight or less, 100 parts by weight or less, 95 parts by weight or less, 90 parts by weight or less, 85 parts by weight or less, 80 parts by weight or less, 75 parts by weight or less, 70 parts by weight or less, 65 parts by weight or less, 60 parts by weight or less, 55 parts by weight or less, 50 parts by weight or less, 45 parts by weight or less, or 40 parts by weight or less, or may also be10 parts by weight or more, 15 parts by weight or more, 20 parts by weight or more, 25 parts by weight or more, 30 parts by weight or more, 35 parts by weight or more, 40 parts by weight or more, 45 parts by weight or more, 50 parts by weight or more, 55 parts by weight or more, 60 parts by weight or more, 65 parts by weight or more, 70 parts by weight or more, or 75 parts by weight or more or so.

The curable composition may further comprise, as an optional additional component, a hollow filler in view of weight reduction.

It can contribute to weight reduction through the application of the hollow filler.

For example, the filler may have a D50 particle diameter (average particle diameter) in a range of 10 μm to 100 μm. In another example, the D50 particle diameter may be 12 μm or more, 14 μm or more, 16 μm or more, 18 μm or more, 20 μm or more, 22 μm or more, 24 μm or more, 26 μm or more, 28 μm or more, 30 μm or more, 32 μm or more, 34 μm or more, 36 μm or more, 38 μm or more, 40 μm or more, 42 μm or more, 44 μm or more, 46 μm or more, 48 μm or more, 50 μm or more, 52 μm or more, 54 μm or more, 56 μm or more, or 58 μm or more, or may be 98 μm or less, 96 μm or less, 94 μm or less, 92 μm or less, 90 μm or less, 88 μm or less, 86 μm or less, 84 μm or less, 82 μm or less, 80 μm or less, 78 μm or less, 76 μm or less, 74 μm or less, 72 μm or less, 70 μm or less, 68 μm or less, 66 μm or less, 64 μm or less, 62 μm or less, or 60 μm or less or so.

The hollow filler may have a density in a range of about 0.05 to 1 g/ml. In another example, the density may be 0.01 g/ml or more, 0.15 g/ml or more, 0.2 g/ml or more, 0.25 g/ml or more, 0.3 g/ml or more, 0.35 g/ml or more, 0.4 g/ml or more, 0.45 g/ml or more, 0.5 g/ml or more, 0.55 g/ml or more, or 0.6 g/ml or more, or may also be 0.95 g/ml or less, 0.9 g/ml or less, 0.85 g/ml or less, 0.8 g/ml or less, 0.75 g /ml or less, 0.7 g/ml or less, 0.65 g/ml or less, 0.6 g/ml or less, 0.55 g/ml or less, 0.5 g/ml or less, 0.45 g/ml or less, 0.4 g/ml or less, 0.35 g/ml or less, 0.3 g/ml or less, 0.25 g/ml or less, 0.2 g/ml or less, or 0.15 g/ml or less or so.

Various types may be applied as the hollow filler without particular limitation as long as it has the particle diameter and/or density and can be uniformly mixed with the curable polyorganosiloxane component.

For example, as a hollow filler, a known organic filler, inorganic filler, or organic-inorganic mixed filler may be used. Even when the hollow filler is applied, organic particles in which the shell portion is made of an organic material, inorganic particles made of an inorganic material, and/or organic and inorganic particles made of an organic and inorganic material, and the like may be used. Such particles may be exemplified by acrylic particles such as PMMA (poly(methyl methacrylate)), epoxy particles, nylon particles, styrene particles and/or styrene/vinyl monomer copolymer particles, and the like, or inorganic particles such as silica particles, alumina particles, indium oxide particles, tin oxide particles, zirconium oxide particles, zinc oxide particles and/or titania particles, and the like, but are not limited thereto.

In one example, as the hollow filler, particles in which a shell portion is made of a soda-lime material (soda-lime filler), particle in which a shell portion is made of a soda-lime borosilicate material (soda lime borosilicate filler), a cenosphere filler or other silica particles may be applied.

When the hollow filler is included, the ratio is not particularly limited, and may be selected in an appropriate ratio within a range in which a desired weight reduction is possible without impairing the physical properties of the cured body.

The curable composition may comprise other necessary components in addition to the above components. For example, the curable composition may further comprise additional additives, for example, a catalyst, a pigment or dye, a dispersant, a thixotropy imparting agent, a flame retardant, and the like, if necessary, in addition to the above components.

Such a curable composition may be a solvent-based composition, an aqueous composition, or a solventless composition, and may suitably be a solventless composition.

As described above, the curable composition may be a one-component composition or a two-component composition, and in some cases, it may be a main agent or curing agent part of the two-component composition, or a mixture of the main agent and curing agent parts.

In addition, when the curable composition is a two-component composition, there is no particular limitation on the ratios of other components in the main agent and curing agent parts other than the curable resin component. For example, the phase change material and/or the filler may be included in both the main agent and curing agent parts, or may be included in the main agent and curing agent parts separately.

The curable composition of the present application is suitably used for various applications, and in particular, it is applied to a heating product, whereby it can be used as a material for controlling heat of the product.

In one example, in order to satisfy the latent heat characteristics, weight change rate, density and/or hardness characteristics as described above, a method for preparing the curable composition may be selected.

For example, the curable composition may be prepared by mixing the phase change material and the curable resin component in a state in which the phase change material is melted. Through this step, the desired curable composition can be more effectively provided.

Therefore, the method for preparing the curable composition may comprise a step of mixing the melted phase change material and the curable resin component, and specifically, may comprise steps of melting the phase change material, and mixing the melted phase change material and the curable resin component.

Here, the method of melting the phase change material is not particularly limited, and for example, it may be melted by maintaining the phase change material at a temperature of the melting point of the phase change material or more.

In one example, the holding temperature of the phase change material may be a temperature higher than the melting point of the phase change material by 10°C to 100°C or more. In another example, the temperature may be a temperature higher than the melting point of the phase change material by 15°C or more, 20°C or more, 25°C or more, or 30°C or more, and/or a temperature lower than the melting point of the phase change material by 95°C or less, 90°C or less, 85°C or less, 80°C or less, 75°C or less, 70°C or less, 65°C or less, 60°C or less, 55°C or less, 50°C or less, 45°C or less, 40°C or less, 35°C or less, or 30°C or less.

By mixing the phase change material melted in this temperature range and the curable resin component to prepare the curable composition, it is possible to efficiently prepare the curable composition having the desired properties. The temperature at the time of mixing the melted phase change material and the curable resin component may be a temperature within the same range as the temperature at which the phase change material is melted, or a temperature lower than that.

In one example, the mixing may be performed at a temperature higher than the melting point of the phase change material by 10°C to 100°C or more. In another example, the temperature may be a temperature higher than the melting point of the phase change material by 15°C or more, 20°C or more, 25°C or more, or 30°C or more, or a temperature lower than the melting point of the phase change material by 95°C or less, 90°C or less, 85°C or less, 80°C or less, 75°C or less, 70°C or less, 65°C or less, 60°C or less, 55°C or less, 50°C or less, 45°C or less, 40°C or less, 35°C or less, or 30°C or less.

The present application also relates to a cured body of the above-described curable composition. A method for curing the curable composition to obtain a cured body is not limited, and an appropriate curing method is applied according to the type of the curable composition. For example, a method of irradiating the composition with energy beams such as ultraviolet rays in the case of the energy beam curing type, a method of maintaining the composition under appropriate moisture in the case of the moisture curing type, a method of applying appropriate heat to the composition in the case of the thermal curing type, a method of maintaining the composition at room temperature in the case of the room temperature curing type, a method of applying two or more curing methods in the case of the hybrid curing type, and the like may be used. As described above, in a suitable example, the curable composition may be of the room temperature curable type.

The present application also relates to an article comprising the composition or the cured body thereof. The curable composition of the present application or the cured body thereof may be usefully applied as a material for controlling heat of a heat-producing component, a heating element, or a heating product. Therefore, the article may comprise a heat-producing component or a heating element or a heating product. The term heat-producing component, element or product means a component, element or product that generates heat during use, and the type thereof is not particularly limited. Representative heat-producing components, elements, or products include various electric/electronic products comprising battery cells, battery modules, or battery packs, and the like.

The article of the present application may comprise, for example, the heat-producing component, element, or product, and the curable composition (or two-component composition) or the cured body thereof existing adjacent to the heat-producing component and the like. In this case, as described above, the heat-producing component, element or product may be a component, element or product having an appropriate driving temperature in the range of approximately 15°C to 60°C. That is, the curable composition of the present application is useful for being disposed adjacent to the heat-producing component, element, or product to uniformly maintain the driving temperature of the product within the above range.

The specific method of constituting the article of the present application is not particularly limited, and if the curable composition or the two-component composition of the present application or the cured body thereof is applied as a heat dissipation material, the article may be configured in various known methods.

In one example, the curable composition may be used as a potting material upon constructing a battery module or battery pack. The potting material may be a material covering at least a part or all of a plurality of unit battery cells in a battery module or a battery pack while being in contact with the same. When the curable composition of the present application or the cured body thereof has been applied as the potting material, it can control heat generated in the battery cells of the battery module or pack, can prevent chain ignition or explosion, and the like, and can uniformly maintain the driving temperature of the module, pack, or battery cells. In the present application, it is possible to provide a curable composition that has excellent potting efficiency because viscosity or thixotropy is controlled to an appropriate level before curing, and forms a stable potting structure without generating unnecessary bubbles after curing. In the present application, it is possible to provide a curable composition capable of providing a battery module or pack having high power while being lightweight compared to the volume by showing a low density after curing. In the present application, it is also possible to provide a curable composition having excellent required physical properties including insulation and the like.

In this case, regarding a battery-related technology, the curable composition may be applied as a heat dissipation material of a battery module or a battery pack, and the like, or a heat dissipation material of an OBC (on-board charger) for a vehicle. Therefore, the present application may also relate to a battery module, battery pack, or on-board charger

(OBC) comprising the curable composition or the cured body thereof as the heat dissipation material. In the battery module, battery pack, or on-board charger, the application position or application method of the curable composition or the cured body is not particularly limited, and a known method may be applied. In addition, the curable composition of the present application is not limited to the above use, which can be effectively applied to various uses requiring excellent heat dissipation properties, storage stability and adhesion force.

In another example related to the present application, the present application may relate to an electronic apparatus or device having the cured body of the curable composition.

The type of electronic apparatus or device is not particularly limited, which may be exemplified by, for example, an AVN (audio video navigation) for a vehicle, or an OBC (on-board charger) module for an electric vehicle, an LED module or IC chip, and a computer or mobile device comprising the same.

The cured body of the curable composition may radiate heat within the apparatus or device, and may impart durability against impact, insulation, and the like.

In one example, the curable composition may be used as a battery potting material.

The present application also relates to a battery module to which the potting material is applied. Such a battery module can exhibit high power while being lightweight compared to the same volume, where the heat generated from the battery cells, and the like is appropriately controlled, and problems such as chain ignition do not occur.

In one example, the battery module may comprise a substrate; a plurality of battery cells disposed on the substrate; and the curable composition or the cured product thereof covering at least a part or all of the plurality of battery cells.

In the above structure, in one example, the curable composition or its cured product (potting material) may cover the battery cells while being in contact with the whole surface of the plurality of battery cells (except for the surface of the battery cells in contact with the substrate side) (structure of Figure 1), or may be in contact only with upper portions of the plurality of battery cells (structure of Figure 2).

Figures 1 and 2 are schematic diagrams of such battery module structures, and are views showing structures comprising a substrate (10); battery cells (20) and the potting material (30, the curable composition or the cured product thereof). The battery module may further comprise an adhesive material (40) for fixing the battery cells (20) to the substrate (10), and in one example, the adhesive material (40) may be configured to have thermal conductivity.

As long as the curable composition or its cured product is applied as a potting material, the specific configuration of the battery module, for example, the types of the battery cell, the substrate, and/or the adhesive material are not particularly limited, and known materials may be applied.

For example, known pouch type, rectangular or cylindrical battery cells may be applied as the battery cells, and a known material may also be applied as the substrate or adhesive material.

The manufacturing method of the battery module is not particularly limited, and for example, it may be formed through steps of pouring the curable composition onto the upper portions of a plurality of battery cells formed on a substrate, and curing it if necessary.

Since the curable composition of the present application has appropriate viscosity and thixotropy, it can efficiently fill between battery cells disposed very adjacently, and can exhibit desired thermal insulation properties and heat shielding properties, and the like after forming a potting material.

For example, the product such as the battery module or battery pack may be manufactured by a method comprising the steps of melting the curable composition by maintaining it at an appropriate temperature, and applying the curable composition melted in the above step to the heat-producing component.

Here, the temperature in the step of melting the curable composition may be determined according to a specific application aspect. For example, when the heating product is the above-described battery cells, battery module or battery pack, the lower limit of the temperature in the melting step may be 40°C or 50°C or so, and the upper limit thereof may be 80°C or 70°C or so. The temperature may be more than any one of the above-described lower limits, or the lower limit or more, may be less than any one of the above-described upper limits, or the upper limit or less, or may be in the range from more than any one of the above-described lower limits, or the lower limit or more to less than any one of the above-described upper limits, or the upper limit or less. If the temperature is too low, the fluidity of the curable composition is deteriorated, or the curing rate of the curable composition is excessively fast after melting, so that the application may not be easy, and if it is too high, the damage to the heating product occurs, or the phase change material having a relatively low density in the curable composition migrates to the surface, so that a non-uniform cured body may also be generated.

There is no particular limitation on a method of applying the melted curable composition to the heat-producing component, and the curable composition may be applied through a known potting process or other processes.

In addition, if necessary, the step of curing the curable composition after the application may be performed, where an appropriate method may be selected as the curing method according to the type of the curable composition.

[Effects of Invention]

The present application can provide a curable composition and a use thereof. As the curable composition of the present application is applied to a product that generates heat during the driving or maintaining process, it is possible to provide a curable composition that can be used as a material capable of treating the heat. The curable composition of the present application is applied to a product in which a plurality of elements generating heat are integrated, so that it is possible to efficiently treat the heat generated by the elements while maintaining a uniform temperature of the product. In addition, the curable composition of the present application is applied to such products, so that even when abnormal heat, explosion or ignition occurs in any one of the plurality of elements, the impact of such heating, explosion or ignition to other adjacent elements can be prevented or minimized. The curable composition of the present application can also stably perform the above functions over a long period of time. The present application can also provide a cured body formed by such a curable composition, or a use of the curable composition or the cured body.

[Brief Description of Drawings]

Figures 1 and 2 are schematic diagrams of exemplary battery modules of the present application.

Figures 3 to 5 are views showing DSC analysis results of the cured bodies of Examples 1 to 3, respectively.

[Mode for Invention]

Hereinafter, the present application will be described in detail through Examples, but the scope of the present application is not limited by Examples below.

**1. Measurement of latent heat**

The latent heat was evaluated in the following manner. About 3 to 5 mg or so of a sample was loaded into a DSC (Differential Scanning Calorimeter) equipment (TA instrument, Q200 model). After setting the temperature zone of the equipment for evaluation of the latent heat from -20°C to 200°C, the endothermic zone was measured while the temperature was raised at a rate of about 10°C/min, and the endothermic peak identified in the endothermic zone was integrated to calculate the latent heat (unit: J/g). The temperature at the inflection point from the left onset of the endothermic peak was the latent heat zone start temperature (on-set temperature), and the temperature at the inflection point from the right onset point was the latent heat zone end temperature (off-set temperature), where the width of the latent heat zone was a value obtained by subtracting the on-set temperature from the off-set temperature.

Upon measuring latent heat of a phase change material, the relevant phase change material was used as the sample.

Upon measuring the latent heat of the cured body, the sample was prepared by curing a curable composition. Specifically, a mixture was prepared by mixing the main agent and curing agent parts of the curable composition in a volume ratio of 1:1, and the mixture was left in a chamber at 80°C for about 1 hour or so, and then applied to an aluminum dish with an injector to a thickness of about 10 mm or so, and maintained at room temperature (about 25°C) for 24 hours to prepare a cured body.

Meanwhile, here, the melting point of the phase change material was defined as the temperature at the apex of the endothermic peak.

**2. Temperature control performance test**

The main agent and curing agent parts of the curable composition were mixed in a volume ratio of 1:1, and the mixed state was maintained in a chamber at 80°C for 1 hour or so. Subsequently, the mixture was applied to a thickness of about 10 mm or so on an aluminum dish with an injector, and maintained at room temperature (about 25°C) for about 24 hours to be cured. A specimen was prepared by cutting the cured body into a square in which a width and a length were each 3 cm. A K-type thermocouple (manufactured by OMEGA) was attached to a hot plate (AS ONE, NDK-1A-F model), and the specimen was closely attached thereon and fixed with a tape. Subsequently, while the temperature of the hot plate was increased from 35°C at a rate of about 5.45°C/min, the temperature was measured at a time when 11 minutes had elapsed from the kickoff point of the temperature increase (temperature data logger: FLUKE IR thermometers 566 model).

### 3. Hardness measurement

The main agent and curing agent parts of the curable composition were mixed in a volume ratio of 1:1, and the mixed state was maintained in a chamber at 80°C for 1 hour or so, and subsequently, the mixture was applied to a thickness of about 10 mm or so on an aluminum dish with an injector, and then maintained at room temperature (about 25°C) for about 24 hours to be cured, and the hardness of the cured body was measured according to ASTM D2240 standard. Upon the hardness measurement, an ASKER Durometer instrument was used. The initial hardness was measured by applying a load of about 1.5 kg or so to the surface of the sample in a flat state, and the hardness was evaluated by confirming the measured value stabilized after 15 seconds. Shore A or Shore OO hardness was measured.

### 4. Measurement of density

The density of the cured body was identified using a gas pycnometer equipment (model name: BELPYCNO, manufacturer: MicrotracBEL) according to ASTM D792 standard. It is possible to identify the density measurement value at room temperature according to the helium gas injection using the equipment. The main agent and curing agent parts prepared in Examples or Comparative Examples were mixed in a volume ratio of 1:1, and the mixed state was maintained in a chamber at 80°C for 1 hour or so, and subsequently, the mixture was applied to a thickness of about 10 mm or so on an aluminum dish with an injector, and then maintained at room temperature (about 25°C) for about 24 hours to be cured, whereby the cured body was prepared.

### 5. GPC (Gel Permeation Chromatograph)

Molecular weight properties of a material were measured using GPC (gel permeation chromatography). An analyte material is placed in a 5 mL vial, and diluted in toluene to a concentration of about 5 mg/mL or so. Thereafter, the standard sample for calibration and the material to be analyzed were filtered through a syringe filter (pore size: 0.45 μm), and then they were measured. As the analysis program, Agilent Technologies' ChemStation was used, and the weight average molecular weight (Mw) and number average molecular weight (Mn) were each obtained by comparing the elution time of the sample with the calibration curve. The measurement conditions of GPC are as follows.

<GPC measurement conditions>

Instrument: Agilent technologies' 1200 series

Column: using 2 PLgel mixed B from Polymer laboratories

Solvent: toluene

Column temperature: 40°C

Sample concentration: 5mg/mL, 10μL injection

Standard sample: polystyrene (Mp: 3900000, 723000, 316500, 52200, 31400, 7200, 3940, 485)

### 6. Particle diameter analysis of filler

The particle diameter of the filler was measured using Marven's MASTERSIZER 3000 equipment in accordance with ISO-13320, and ethanol was used as a solvent upon the measurement. As the particle diameter of the filler, the D50 particle diameter was measured, which was taken as the average particle diameter. The D50 particle diameter is the particle diameter (median diameter) at 50% cumulative by volume of the particle size distribution, which is the particle diameter at the point where the cumulative value becomes 50% on the cumulative curve with the total volume as 100%, after obtaining the particle size distribution on the basis of the volume.

### 7. Weight change (ΔW)

The main agent and curing agent parts of the curable composition were mixed in a volume ratio of 1:1 to prepare a mixture. The mixture was maintained in a chamber at 80°C for 1 hour or so, and applied on an aluminum dish with an

injector to a thickness of about 10 mm or so. The applied mixture was maintained at room temperature (about 25°C) for 24 hours and cured to prepare a cured body. A specimen (weight: Wi, unit g) was prepared by cutting the cured body into a square in which a width and a length were each 1 cm. The specimen was placed on a filter paper, and this state was maintained in a chamber at about 80°C for about 24 hours, and then taken out, and the weight of the specimen (weight: $W_f$, unit g) was measured again. The weight change rate (ΔW) was measured by substituting the weights measured in the above process into Equation A below. For each of the four specimens formed of the same curable composition, the weight change rate was measured, and the average value was described in Tables 1 and 2 below.

[Equation A]

$$\Delta W = 100 \times (W_f - W_i)/W_i$$

**Example 1.**

**Preparation of main agent part**

As the curable resin component, a silicone resin component (manufactured by Lord, CoolTherm SC-6705) was used. A main agent part was prepared by mixing the main agent of the silicone resin component and a phase change material. As the phase change material, docosane (n-docosane) and eicosane (n-eicosane) were used. In the DSC analysis, the docosane had a melting point of about 44°C or so, and a latent heat of about 170 J/g or so, and the eicosane had a melting point of about 36°C or so, and a latent heat of about 152 J/g or so. In addition, the docosane had a latent heat zone start temperature (on-set temperature) of about 41.53°C or so, and a latent heat zone end temperature (off-set temperature) of about 46.99°C or so, and the eicosane had a latent heat zone start temperature (on-set temperature) of about 31.79°C or so, and a latent heat zone end temperature (off-set) of about 38.96°C or so. Therefore, the latent heat zone (the value obtained by subtracting the on-set temperature from the off-set temperature) of the docosane is about 5.46°C or so, and the latent heat zone of the eicosane is about 7.17°C or so. The weight average molecular weight (Mw) of the silicone resin component was about 28,000 g/mol or so. Upon the mixing, the mixing ratio was set to a weight ratio of 76.1:17.9:6 (main agent: n-docosane: n-eicosane). Upon the preparation of the main agent part, first, the phase change material was maintained at a temperature of about 80°C for 1 hour, and completely melted, and the melted phase change material was mixed with the main agent, and the like, and stirred at 380 rpm for 30 minutes to prepare the main agent part. The mixing of the phase change material and the main agent was performed at a temperature of about 80°C or so.

**Preparation of curing agent part**

A curing agent part was prepared by mixing the curing agent of the silicone resin component (CoolTherm SC-6705, manufactured by Lord) and a phase change material. As the phase change material, the same materials as in the preparation of the main agent part were used. Upon the mixing, the mixing ratio was set to a weight ratio of 76.1:17.9:6 (curing agent: n-docosane: n-eicosane). Upon the preparation of the curing agent part, first, the phase change material was maintained at a temperature of about 80°C for 1 hour, and completely melted, and the melted phase change material was mixed with the main agent, and the like, and stirred at 380 rpm for 30 minutes to prepare a main agent part. The mixing of the phase change material and the curing agent was performed at a temperature of about 80°C or so.

**Curable composition**

A curable composition was prepared by preparing the main agent and curing agent parts in a volume ratio of 1:1. The curable composition is a room temperature curing type, which can be cured by maintaining the curable composition at room temperature for about 12 hours or more. Figure 3 is a view showing the results of the DSC analysis performed on the cured body.

**Example 2.**

A main agent part, a curing agent part, and a curable composition were prepared in the same manner as in Example 1, respectively, except that upon the preparation of the main agent and curing agent parts, an aluminum hydroxide filler (ATH) having an average particle diameter (D50 particle diameter) of about 50μm or so was further compounded, and the compound ratio upon compounding the main agent part was set to a weight ratio of about 48.7:11.4:3.9:36 (main agent: n-docosane: n-eicosane: ATH), and the compound ratio upon compounding the curing

agent part was set to a weight ratio of about 48.7:11.4:3.9:36 (curing agent: n-docosane: n-eicosane: ATH). Figure 4 is a view showing the results of the DSC analysis performed on the cured body.

**Example 3.**

A main agent part, a curing agent part, and a curable composition were prepared in the same manner as in Example 1, respectively, except that upon the preparation of the main agent and curing agent parts, an aluminum hydroxide filler (ATH) having an average particle diameter (D50 particle diameter) of about 50 μm or so was further compounded, and the compound ratio upon compounding the main agent part was set to a weight ratio of about 48.7:13.4:1.9:36 (main agent: n-docosane: n-eicosane: ATH), and the compound ratio upon compounding the curing agent part was set to a weight ratio of about 48.7:13.4:1.9:36 (curing agent: n-docosane: n-eicosane: ATH). Figure 5 is a view showing the results of the DSC analysis performed on the cured body.

**Comparative Example 1**

A main agent part, a curing agent part, and a curable composition were prepared in the same manner as in Example 1, respectively, except that upon the preparation of the main agent and curing agent parts, only one type of n-docosane was used as the phase change material, an aluminum hydroxide filler (ATH) having an average particle diameter (D50 particle diameter) of about 50 μm or so was further compounded, and the compound ratio upon compounding the main agent part was set to a weight ratio of about 50.8:15.9:33.3 (main agent: n-docosane: ATH), and the compound ratio upon compounding the curing agent part was set to a weight ratio of about 50.8:15.9:33.3 (curing agent: n-docosane: ATH).

**Comparative Example 2.**

A main agent part, a curing agent part, and a curable composition were prepared in the same manner as in Example 1, respectively, except that upon the preparation of the main agent and curing agent parts, only one type of n-eicosane was used as the phase change material, and the compound ratio upon compounding the main agent part was set to a weight ratio of about 76:24 (main agent: n-eicosane), and the compound ratio upon compounding the curing agent part was set to a weight ratio of about 76:24 (curing agent: n-eicosane).

**Comparative Example 3.**

A main agent part, a curing agent part, and a curable composition were prepared in the same manner as in Example 1, respectively, except that the compound ratio upon compounding the main agent part was set to a weight ratio of about 76.1:22.4:1.5 (main agent: n-docosane: n-eicosane), and the compound ratio upon compounding the curing agent part was set to a weight ratio of about 76.1:22.4:1.5 (curing agent: n-docosane: n-eicosane).

**Comparative Example 4.**

**Preparation of main agent part**

As the curable resin component, a silicone resin component (manufactured by Lord, CoolTherm SC-6705) was used. A main agent part was prepared by compounding the main agent of the silicone resin component, a phase change material, and an aluminum hydroxide filler (ATH) having an average particle diameter (D50 particle diameter) of about 50 μm or so. As the phase change material, n-docosane as used in Example 1 and paraffin (OCI) were used. In the DSC analysis, the paraffin (OCI) had a melting point of about 62°C or so, a latent heat of about 170 J/g or so, and a latent heat zone start temperature (on-set temperature) of about 45.89°C or so, and a latent heat zone end temperature (off-set temperature) of about 67.44°C or so. Upon the mixing, the mixing ratio was set to a weight ratio of 48.6:11.4:4:36 (main agent: n-docosane: paraffin (OCI): ATH). The mixing was performed in the same manner as in Example 1.

**Preparation of curing agent part**

A curing agent part was prepared by mixing the curing agent of the silicone resin component (manufactured by Lord, CoolTherm SC-6705), a phase change material, and an aluminum hydroxide filler. As the phase change material and the aluminum filler, the same ones as those used upon the preparation of the main agent part were used. Upon the mixing, the mixing ratio was set to a weight ratio of 48.6:11.4:4:36 (curing agent: n-docosane: paraffin (OCI): ATH). The mixing was performed in the same manner as in Example 1.

**Curable composition**

A curable composition was prepared by preparing the main agent and curing agent parts in a volume ratio of 1:1. The curable composition is a room temperature curing type, which can be cured by maintaining the curable composition at room temperature for about 12 hours or more. Figure 3 is a view showing the results of the DSC analysis performed on the cured body.

**Comparative Example 5.**

**Preparation of main agent part**

As the curable resin component, a silicone resin component (manufactured by Lord, CoolTherm SC-6705) was used. A main agent part was prepared by compounding the main agent of the silicone resin component, a phase change material, and an aluminum hydroxide filler (ATH) having an average particle diameter (D50 particle diameter) of about 50 $\mu$m or so. As the phase change material, paraffin (OCI) as applied in Comparative Example 4 and a second paraffin (Junsei) different from the paraffin were used. In the DSC analysis, the paraffin (Junsei) had a melting point of about 28°C or so, a latent heat of about 175 J/g or so, and a latent heat zone start temperature (on-set temperature) of about 27.28°C or so, and a latent heat zone end temperature (off-set temperature) of about 29.15°C or so. Upon the mixing, the mixing ratio was set to a weight ratio of 48.6:7.7:7.7:36 (main agent: paraffin (OCI): paraffin (Junsei): ATH). The mixing was performed in the same manner as in Example 1.

**Preparation of curing agent part**

A curing agent part was prepared by mixing the curing agent of the silicone resin component (manufactured by Lord, CoolTherm SC-6705), a phase change material, and an aluminum hydroxide filler. As the phase change material and the aluminum filler, the same ones as those used upon the preparation of the main agent part were used. Upon the mixing, the mixing ratio was set to a weight ratio of 48.6:7.7:7.7:36 (main agent: paraffin (OCI): paraffin (Junsei): ATH). The mixing was performed in the same manner as in Example 1.

**Curable composition**

A curable composition was prepared by preparing the main agent and curing agent parts in a volume ratio of 1:1. The curable composition is a room temperature curing type, which can be cured by maintaining the curable composition at room temperature for about 12 hours or more. Figure 3 is a view showing the results of the DSC analysis performed on the cured body.

The evaluation results for the Examples and Comparative Examples are summarized in Tables 1 and 2 below.

[Table 1]

| | Example | | |
|---|---|---|---|
| | 1 | 2 | 3 |
| Cured body latent heat (J/g) | 36.95 | 32.18 | 37.20 |
| On-set temperature (°C) | 24.32 | 24.31 | 29.64 |
| Off-set temperature (°C) | 43.02 | 43.74 | 44.01 |
| Temperature zone width (°C) | 18.7 | 19.43 | 14.37 |
| Cured body density (g/cm$^3$) | 0.919 | 1.185 | 1.184 |
| Cured body hardness (shore A) | 58 | 61 | 60 |
| Temperature control performance (°C) | 7.5 | 8.7 | 7 |
| Weight change (%) | 2.8 | 1.6 | 1.5 |

[Table 2]

| | Comparative Example | | | | |
|---|---|---|---|---|---|
| | 1 | 2 | 3 | 4 | 5 |
| Cured body latent heat (J/g) | 30.11 | 36.50 | 40.89 | 26.62 | 23.38 |
| On-set temperature (°C) | 40.34 | 33.49 | 38.12 | 25.38 | 19.55 |
| Off-set temperature (°C) | 48.91 | 36.92 | 44.46 | 48.25 | 40.87 |
| Temperature zone width (°C) | 8.57 | 3.43 | 6.34 | 22.87 | 21.32 |
| Cured body density (g/cm$^3$) | 1.159 | 0.92 | 0.936 | 1.184 | 1.184 |
| Cured body hardness (shore A) | 62 | 58 | 58 | 60 | 58 |
| Temperature control performance (°C) | 4.5 | 3.8 | 2.2 | 4.9 | 3.1 |
| Weight change (%) | 1.5 | 2.6 | 2.8 | 1.6 | 2.0 |

## Claims

**1.** A curable composition, comprising:

a curable resin component and
a phase change material,
wherein the curable composition forms a cured body exhibiting a latent heat of 25 J/g or more within a temperature range of 0°C to 60°C, and
wherein the curable body has a latent heat zone width of 9°C or more.

**2.** The curable composition according to claim 1, wherein the latent heat zone width of the cured body is in a range of 9°C to 20°C.

**3.** The curable composition according to claim 1, wherein the cured body has a density in a range of 0.7 g/cm$^3$ to 1.5 g/cm$^3$.

**4.** The curable composition according to claim 1, wherein the cured body has a Shore OO hardness within a range of 20 to 90 or a Shore A hardness within a range of 10 to 90.

**5.** The curable composition according to claim 1, wherein the curable resin component has a weight average molecular weight of 9,000 g/mol or more.

**6.** The curable composition according to claim 1, wherein the curable resin component is an acrylic resin component, a polyurethane component, a silicone resin component, or an epoxy resin component.

**7.** The curable composition according to claim 1, wherein the phase change material comprises a first phase change material and a second phase change material.

**8.** The curable composition according to claim 7, wherein the first phase change material has a melting point of more than 40°C and the second phase change material has a melting point of 40°C or less.

**9.** The curable composition according to claim 8, wherein the melting point difference between the first phase change material and the second phase change material is in the range of 1°C to 20°C.

**10.** The curable composition according to claim 7, wherein the first phase change material has a higher on-set temperature than the second phase change material, and the absolute value of the on-set temperature difference is in a range of 5°C to 20°C.

**11.** The curable composition according to claim 7, wherein the latent heat zone of the first phase change material is narrower than the latent heat zone of the second phase change material.

**12.** The curable composition according to claim 11, wherein the absolute value of the difference between the latent heat zone of the first phase change material and the latent heat zone of the second phase change material is more than 1°C and 10°C or less.

**13.** The curable composition according to claim 7, wherein the first phase change material has a higher latent heat than the second phase change material.

**14.** The curable composition according to claim 13, wherein the absolute value of the difference between the latent heat of the first phase change material and the latent heat of the second phase change material is 100% or less.

**15.** The curable composition according to claim 7, wherein the second phase change material is included in an amount of 8 to 100 parts by weight relative to 100 parts by weight of the first phase change material.

**16.** The curable composition according to claim 1, comprising 20 to 75 parts by weight of the phase change material relative to 100 parts by weight of the curable resin component.

**17.** The curable composition according to claim 1, further comprising one or more fillers selected from the group consisting of aluminum hydroxide ($Al(OH)_3$), magnesium hydroxide ($Mg(OH)_2$), calcium hydroxide ($Ca(OH)_2$), boehmite ($AlOOH$), hydromagnesite, magnesia, alumina, aluminum nitride ($AlN$), boron nitride ($BN$), silicon nitride ($Si_3N_4$), silicon carbide ($SiC$), zinc oxide ($ZnO$) and beryllium oxide ($BeO$).

**18.** A method for preparing the curable composition of any one of claims 1 to 17, comprising mixing a melted phase change material and a curable resin component.

**19.** A cured body of the curable composition of any one of claims 1 to 17.

**20.** An article comprising a heat-producing component and the curable composition of claim 1 or the cured body of claim 19 present adjacent to the heat-producing component.

[Figure 1]

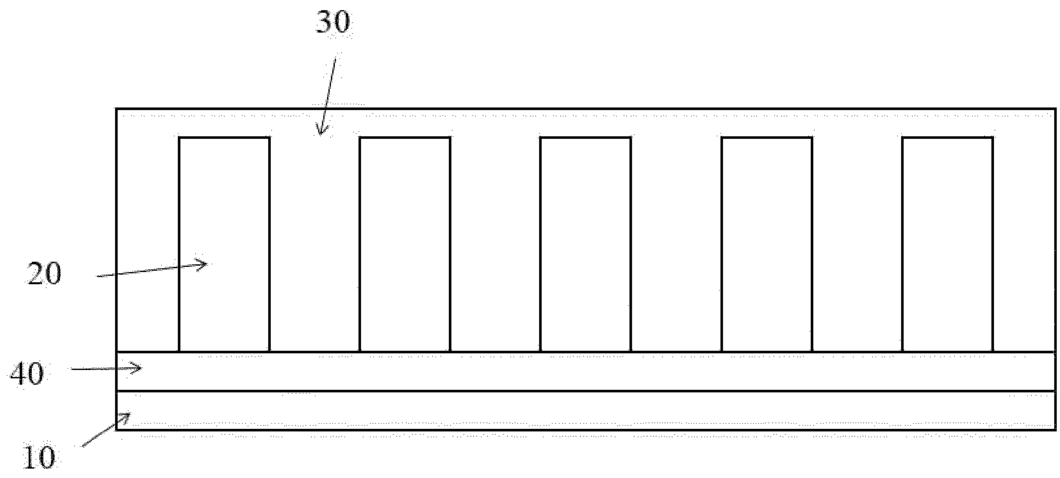


[Figure 2]

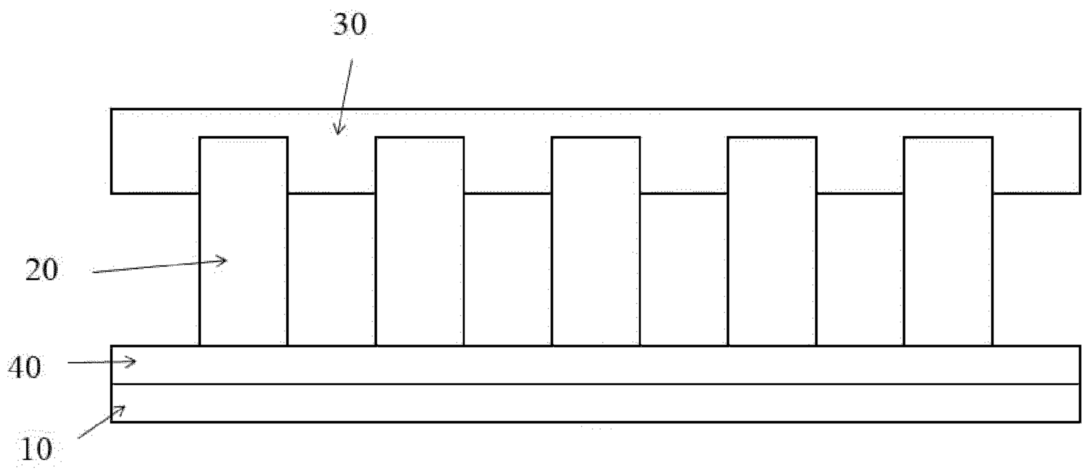

[Figure 3]

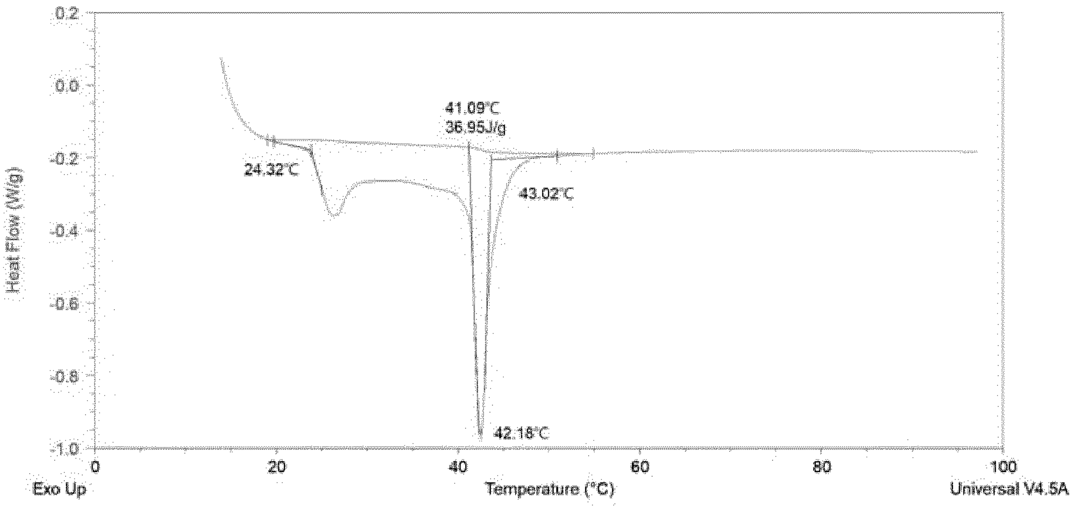
0.2
0.0
-0.2
-0.4
-0.6
-0.8
-1.0
Heat Flow (W/g)
41.09°C
36.95J/g
24.32°C
43.02°C
42.18°C
0
20
40
60
80
100
Exo Up
Temperature (°C)
Universal V4.5A

[Figure 4]

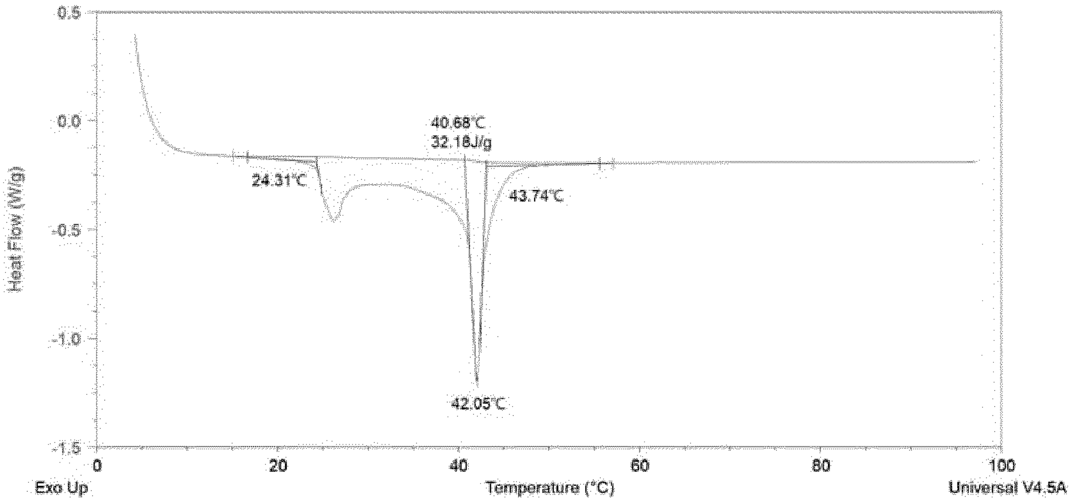

0.5
0.0
-0.5
-1.0
-1.5
Heat Flow (W/g)
40.68°C
32.18J/g
24.31°C
43.74°C
42.05°C
0
20
40
60
80
100
Exo Up
Temperature (°C)
Universal V4.5A

[Figure 5]

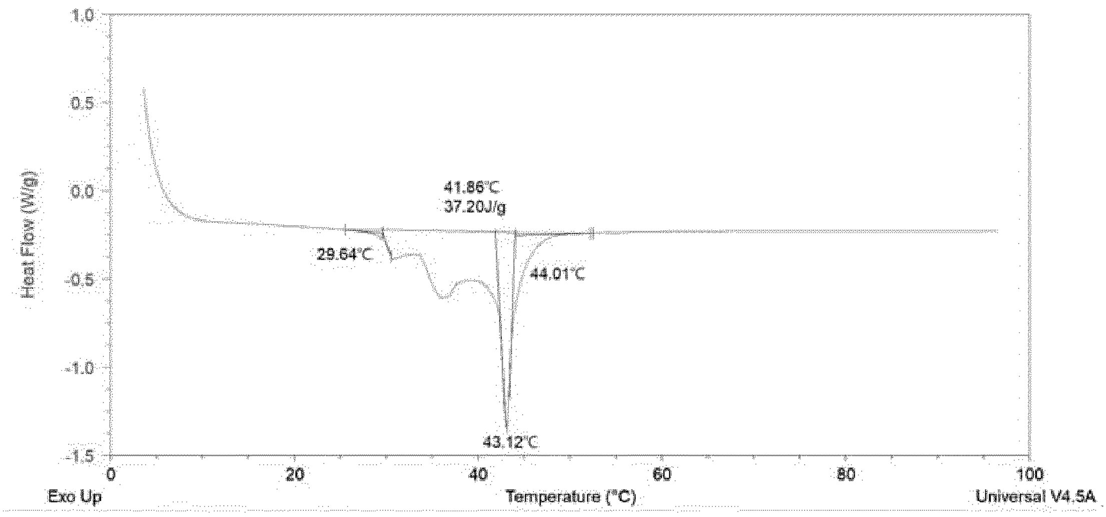
1.0
0.5
0.0
-0.5
-1.0
-1.5
Heat Flow (W/g)
41.86°C
37.20J/g
29.64°C
44.01°C
43.12°C
0
20
40
60
80
100
Exo Up
Temperature (°C)
Universal V4.5A

## INTERNATIONAL SEARCH REPORT

International application No.
**PCT/KR2022/015196**

### A. CLASSIFICATION OF SUBJECT MATTER

**C08L 91/06**(2006.01)i; **C08L 101/00**(2006.01)i; **C08K 3/013**(2018.01)i

According to International Patent Classification (IPC) or to both national classification and IPC

### B. FIELDS SEARCHED

Minimum documentation searched (classification system followed by classification symbols)

C08L 91/06(2006.01); A47G 9/10(2006.01); B05D 3/06(2006.01); C08J 3/12(2006.01); C08J 7/04(2006.01); C09K 5/06(2006.01); F28D 20/02(2006.01); G06F 1/16(2006.01); G06F 1/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 잠열(latent heat), 상전이물질(phase change material, PCM), 에이코산(eicosane), 도코산(docosane)

### C. DOCUMENTS CONSIDERED TO BE RELEVANT

| Category* | Citation of document, with indication, where appropriate, of the relevant passages | Relevant to claim No. |
|---|---|---|
| Y | JP 2008-214408 A (HASEC KK) 18 September 2008 (2008-09-18)<br>See claim 1; and paragraphs [0018]-[0022]. | 1-4 |
| Y | KR 10-2007-0016918 A (SK NETWORKS CO., LTD. et al.) 08 February 2007 (2007-02-08)<br>See claims 1-5; paragraph [0001]; and figure 3. | 1-4 |
| A | US 2016-0223269 A1 (OUTLAST TECHNOLOGIES, LLC) 04 August 2016 (2016-08-04)<br>See entire document. | 1-4 |
| A | KR 10-2016-0042984 A (INTEL CORPORATION) 20 April 2016 (2016-04-20)<br>See entire document. | 1-4 |
| A | US 2005-0239922 A1 (BURNS, B. N. et al.) 27 October 2005 (2005-10-27)<br>See entire document. | 1-4 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 January 2023** | **18 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2022/015196**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **8, 12, 14**
because they relate to parts of the international application that do not comply with the prescribed requirements to such an extent that no meaningful international search can be carried out, specifically:

Claims 8, 12 and 14 refer to claims violating the manner of referring to dependent claims (PCT Rule 6.4(a)), and thus are unclear.

3. ☑ Claims Nos.: **5-7, 9-11, 13, 15-20**
because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.
**PCT/KR2022/015196**

| Patent document cited in search report | Publication date (day/month/year) | Patent family member(s) | Publication date (day/month/year) |
|---|---|---|---|
| JP 2008-214408 A | 18 September 2008 | None | |
| KR 10-2007-0016918 A | 08 February 2007 | KR 10-0741566 B1 | 23 July 2007 |
| US 2016-0223269 A1 | 04 August 2016 | EP 3253583 A1 | 13 December 2017 |
| | | EP 3253583 A4 | 07 November 2018 |
| | | EP 4086082 A1 | 09 November 2022 |
| | | JP 2018-507773 A | 22 March 2018 |
| | | JP 2021-045746 A | 25 March 2021 |
| | | JP 6879920 B2 | 02 June 2021 |
| | | WO 2016-126815 A1 | 11 August 2016 |
| KR 10-2016-0042984 A | 20 April 2016 | CN 105531639 A | 27 April 2016 |
| | | CN 105531639 B | 01 October 2019 |
| | | EP 3055749 A1 | 17 August 2016 |
| | | EP 3055749 A4 | 01 November 2017 |
| | | JP 2016-533043 A | 20 October 2016 |
| | | JP 6373390 B2 | 15 August 2018 |
| | | KR 10-2018-0029088 A | 19 March 2018 |
| | | KR 10-2058523 B1 | 22 January 2020 |
| | | US 10305529 B2 | 28 May 2019 |
| | | US 2016-0269067 A1 | 15 September 2016 |
| | | WO 2015-053801 A1 | 16 April 2015 |
| US 2005-0239922 A1 | 27 October 2005 | US 2008-0177023 A1 | 24 July 2008 |
| | | WO 2005-016987 A1 | 24 February 2005 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210134137
- KR 1020220128214